# EUROPÄISCHE PATENTSCHRIFT

(11) **EP 3 013 125 B1**
(45) Veröffentlichungstag und Bekanntmachung des Hinweises auf die Patenterteilung: **06.12.2017**
(21) Anmeldenummer: 15190544.5
(22) Anmeldetag: 20.10.2015
(51) Int. Cl.: H05B 37/02, F21V 23/04, F21S 2/00, F21Y 115/10, F21W 131/101

(54) **ADAPTIVE STRASSENLEUCHTE**
ADAPTIVE STREET LAMP
ÉCLAIRAGE DE ROUTE ADAPTABLE

(30) Priorität: 20.10.2014 DE 102014015464
(43) Veröffentlichungstag der Anmeldung: 27.04.2016
(73) Patentinhaber: Bartenbach Holding GmbH, 6071 Aldrans (AT)
(72) Erfinder: Canazei, Dipl.-Ing. Mag. Markus Franz, 6166 Fulpmes (AT); Reisecker, Dipl.-Ing. Christian, 6166 Fulpmes (AT); Reithmaier, Ing. Norbert, 6068 Mils (AT)
(74) Vertreter: Thoma, Michael

(56) Entgegenhaltungen:
- WO-A1-2014/013380
- JP-A- 2007 210 377
- JP-A- 2011 141 999
- JP-A- 2011 253 772
- US-A1- 2013 300 299

## Beschreibung

Die vorliegende Erfindung betrifft eine Straßenleuchte, insbesondere Tunnelleuchte, mit mehreren Leuchtenbausteinen, die jeweils zumindest ein Leuchtmittel und eine zugehörige Optik zum Bestrahlen eines begrenzten Strahlungsraums in einer Hauptabstrahlrichtung aufweisen, wobei verschiedene Leuchtenbausteine verschieden ausgerichtete Hauptabstrahlrichtungen besitzen und die von den Leuchtbausteinen bestrahlten Strahlungsräume aufsummiert einen Gesamt-Strahlungsraum mit einer bestimmten Gesamtlichtstärkeverteilung ergeben, wobei die Straßenleuchte in verschiedenen Betriebsmodi betreibbar ist, in denen verschiedene Gesamtlichtstärkeverteilungen mit verschiedenen Gesamt-Hauptabstrahlrichtungen erzeugt werden.

Bei Straßenbeleuchtungen wird generell bei einer guten visuellen Erkennbarkeit von Straßen- und Umgebungskonturen sowie Hindernissen und Fahrzeugen insbesondere auch eine Blendungsfreiheit angestrebt. Einerseits sind natürlich hohe Leuchtdichten auf der Fahrbahn bzw. hohe Lichtströme der Lichtquellen erwünscht, um eine gute Erkennbarkeit von Hindernissen zu erreichen. Andererseits führen Leuchten mit solchermaßen hohen Leuchtdichten wie z.B. LEDs oftmals zu Blendungserscheinungen, insbesondere zur Direktblendung, wenn die jeweilige Person im Strahlungsbereich der Leuchte näherungsweise oder gar ganz entgegen der Strahlungsachse in das Zentrum des Strahlungsbereichs blickt. Insofern werden herkömmliche Straßenleuchten oftmals in relativ großer Höhe montiert, so dass auch bei größerer Beabstandung der Lichtquellen durch entsprechend senkrecht nach unten gerichtete Lichtabgabe die Fahrbahnoberfläche hell ausgeleuchtet werden kann, ohne allzu hohe Blendungserscheinungen zu erzeugen. Bei Tunnelleuchten ist dies allerdings aufgrund der begrenzten Bauhöhe von Tunnelbauwerken nicht möglich.

Eine andere Problematik bei Straßen- und Tunnelbeleuchtungen ist die gleichermaßen konstante und dennoch kontrastreiche Ausleuchtung von einerseits der Tunnel- und Fahrbahnoberflächen und andererseits den sich darin bewegenden Fahrzeuge. Einerseits soll bei freiem Tunnel ohne Verkehr eine optimale Ausleuchtung der Tunneloberflächen erfolgen, andererseits sollen sich darin bewegende Fahrzeuge an ihren Oberflächen gleichmäßig ausgeleuchtet werden, wobei gleichermaßen eine optimale Kontrastwirkung und damit Erkennbarkeit der unterschiedlichen Oberflächen von Fahrzeugen einerseits und Tunnel andererseits gewährleistet sein muss. Insbesondere sollen auf der Fahrbahn liegende Gegenstände kontrastreich und damit gut erkennbar ausgeleuchtet werden. Die Ausleuchtung soll dabei sowohl über die Fläche als auch zeitlich gleichmäßig erfolgen, auch wenn sich ein Fahrzeug bewegt. Dies wird bislang von den üblichen Straßenleuchten nicht erreicht.

Ferner treten bei Straßen- und Tunnelbeleuchtungen oftmals Abschattungen durch die Fahrzeuge, die bei flachem Bestrahlen der Straßenoberfläche weite Schatten werfen und große Schattenräume bewirken, sowie ein Flickern auf, d.h. ein ständiger Wechsel zwischen hell und dunkel beispielsweise auf dem Armaturenbrett eines Fahrzeugs, wenn das Fahrzeug im Tunnel unterschiedlich ausgeleuchtete Bereiche durchfährt.

Dabei treten je nach Verkehrssituation allerdings verschiedene Aspekte der Fahrbahnausleuchtung und der dabei auftretenden Probleme in den Vordergrund, wobei hierbei eine besondere Schwierigkeit darin besteht, dass sich die Verkehrssituationen in gewissen Zyklen wiederholt ändern, beispielsweise morgens und abends starker Berufsverkehr mit hohen Verkehrsdichten und geringen Fahrzeugabständen, in den Nachtstunden PKW-Verkehr mit höheren Fahrgeschwindigkeiten, wochentags höherer LKW-Anteil mit entsprechend starker Verschattungswirkung infolge der großflächigen Fahrzeugkonturen, oder Sonn- und Feiertags höherer PKW-Anteil. Den hieraus resultierenden, sich verändernden Anforderungen werden bisherige Straßenbeleuchtungssysteme nicht ausreichend gerecht.

Heute geltende Standards für die Tunnelbeleuchtung (z.B. CIE 88:2004) beruhen dabei im Wesentlichen auf der Annahme, dass die primäre Sehaufgabe im Innenbereich von Tunnels die Erkennbarkeit eines sehr kurz einsehbaren (0,2 sec), sehr kleinen (20 x 20 cm), dunklen (Reflexionsgrad von 20%) Objekts auf der Tunnelfahrbahn in 86m Entfernung ist. Diese Sehaufgabe fokussiert auf die schnelle Erkennbarkeit von Objekten unter geringem Verkehrsaufkommen.

Die Verkehrssituation hat sich in den letzten Jahrzehnten auf den Straßen und in Tunnels jedoch stark verändert. Heute finden sich auf Straßen primär nicht nur deutlich mehr Personenkraftfahrzeuge sondern auch deutlich mehr LKWs. In der Rush-hour am frühen Morgen oder Abend drängen sich vielfach sehr viele Fahrzeuge gleichzeitig durch Straßentunnels.

Einige Studien konnten aufzeigen, dass die Hauptunfallursache im Durchfahrtsbereich von Tunnels in Auffahrunfällen zu finden ist. Diese Unfälle werden primär durch den Autofahrer selbst bzw. sein Verhalten verursacht, so z.B. das Einhalten zu kurzer Sicherheitsabstände beim hintereinander fahren, Fahrfehler beim Überholen, fehlende Aufmerksamkeit und Müdigkeit.

Aus dieser Beschreibung wird deutlich, dass die primäre Sehaufgabe heute in bestimmten Verkehrssituationen nicht dieselbe ist wie sie bisherige Beleuchtungsnormen vorsehen. Es geht heute nicht mehr nur um die Erkennbarkeit eines sehr weit entfernten Sehobjekts, sondern zunehmend auch um das rasche und fehlerfreie Wahrnehmen und Bewerten der Verkehrssituation im unmittelbaren nahen Umfeld. Hierauf können im Wesentlichen die folgenden drei lichttechnischen Maßnahmen einen positiven Einfluss nehmen, nämlich Anhebung der vertikalen Helligkeit vorausfahrender Fahrzeuge, Reduktion bzw. Vermeidung von Blendung (physiologischer und psychologischer Blendung) und homogene, flimmerfreie Ausleuchtung des Tunnelraums in Fahrtrichtung.

Um hier Abhilfe zu schaffen, werden in jüngerer Zeit Straßenleuchten verwendet, die eine Ausleuchtung der Straße bzw. des Tunnels nach dem sogenannten Mitstrahlprinzip bewirken. Über das Mitstrahlprinzip können vertikale Helligkeiten angehoben und Blendungsphänomene vermieden werden. Die Leuchten strahlen hierbei zumindest im Wesentlichen nur in Fahrtrichtung mit einer asymmetrischen Lichtstärkeverteilung dergestalt, dass der in Fahrtrichtung betrachtet jeweils vor der Leuchte liegende Halbraum abgeblendet ist. Um dies bei punktförmigen Lichtquellen zu erreichen, können Linsen Verwendung finden, die das Licht der jeweiligen punktförmigen Lichtquelle einfangen und mit asymmetrischer Lichtstärkeverteilung in die gewünschte Richtung abstrahlen, vgl. DE 10 2008 019 944. Durch lineare Lichtbänder an der Tunneldecke oder einen verkürzten Tunnelleuchtenabstand kann dabei der Tunnelraum homogen ausgeleuchtet werden.

Derartige Tunnelleuchten mit den Lichtquellen zugeordneten, asymmetrischen Linsen können an sich eine hervorragende Ausleuchtung der Fahrbahn- und ggf. Tunneloberfläche und des über der Fahrbahn liegenden Raums erreichen, wobei trotz hoher Leuchtdichten eine weitgehende Blendungsfreiheit erreicht und Flickereffekte vermieden werden können. Allerdings sind derartige Straßenleuchten nach dem Mitstrahlprinzip hinsichtlich ihrer Effizienz nachteilig, da die lichtspiegelnde Eigenschaft des Fahrbahnbelags ungenutzt bleibt, so dass hohe Leuchtdichten auf der Fahrbahn nur mit hohem Energieaufwand erreichbar sind.

Aus der US 2010/0014290 A1 ist ferner eine Straßenlaterne bekannt, deren LEDs eine Linse zugeordnet ist, die einseitig mit einem Randhöcker versehen ist, in den ein reflektierender Schild eingegossen ist, um sich innerhalb der Linse in unerwünschter Richtung ausbreitendes Licht gleich in der Linse in die gewünschte Richtung zurücklenken zu können.

Ferner ist aus der DE 10 2009 021 182 A1 eine Beleuchtungsvorrichtung für Straßen bekannt, bei der eine asymmetrische Linse mit Randerhöhungen über die LEDs gesetzt wird. Die Randerhöhungen sind dabei jedoch an den Querseiten der Linse in etwa parallel zur Fahrtrichtung vorgesehen, so dass zum einen die Linse ungehindert auch entgegen der Fahrtrichtung abstrahlt und zum anderen auch entstehendes Streulicht entgegen der Fahrtrichtung abgestreut werden kann.

Weiterhin beschreibt die WO 2010/056117 A1 eine Tunnelleuchte, die mehrere LEDs mit zugeordneten Reflektoren umfasst, so dass das von den LEDs abgegebene Licht gezielt in einer gewünschten Richtung bzw. mit einer gewünschten Lichtstärkeverteilung abgestrahlt werden kann. Dabei ist eine Hauptstrahlrichtung entgegen der Fahrtrichtung orientiert, um den Kontrast für die durch den Tunnel fahrenden Kraftfahrzeugführer zu erhöhen, wobei jedoch eine in Fahrtrichtung strahlende Komponente vorgesehen sein kann. Bei einer Tunnelsperrung infolge von Bauarbeiten und damit einhergehender Fahrtrichtungsumkehr kann die Leuchte ummontiert werden, um die Hauptabstrahlrichtung umzukehren. Dies löst jedoch nicht die Beleuchtungsprobleme, die bei an sich gleichbleibender Fahrtrichtung in einem Tunnel durch die mannigfach verschiedenen Verkehrssituationen und disparate Umgebungsbedingungen auftreten.

Aus der Schrift WO 2014/013380 ist eine Straßenbeleuchtung bekannt, bei der automatisch von Gegenstrahlprinzip auf Mitstrahlprinzip umgeschaltet werden kann, und zwar in Abhängigkeit der Verkehrsdichte und der Tageszeit, wobei ggfs. auch manuell umgeschaltet werden kann.

Der vorliegenden Erfindung liegt daher die Aufgabe zugrunde, eine verbesserte Straßen-, insbesondere Tunnelleuchte der genannten Art zu schaffen, die Nachteile des Standes der Technik vermeidet und Letzteren in vorteilhafter Weise weiterbildet. Insbesondere soll mit einer kostengünstigen Leuchte für verschiedene Verkehrssituationen und Umgebungsbedingungen gleichermaßen eine möglichst blendungsfreie, kontrastreiche Fahrbahnausleuchtung erreicht werden, ohne hierbei zu große Effizienzverluste in Kauf nehmen zu müssen.

Erfindungsgemäß wird diese Aufgabe durch eine Straßen-, insbesondere Tunnelleuchte gemäß Anspruch 1 gelöst. Bevorzugte Ausgestaltungen der Erfindung sind Gegenstand der abhängigen Ansprüche.

Es wird also vorgeschlagen, die Straßenleuchte hinsichtlich der von ihr bewirkten Lichtstärkeverteilung variabel auszubilden, so dass in verschiedenen Betriebsmodi verschiedene Gesamtlichtstärkeverteilungen mit verschiedenen Gesamt-Hauptabstrahlrichtungen erzeugt werden können. Erfindungsgemäß ist ein automatischer Umschalter zum Umschalten zwischen den verschiedenen Betriebsmodi und Einstellen verschiedener Gesamt-Hauptstrahlrichtungen in Abhängigkeit zumindest eines Parameters aus der Parametergruppe umfassend Verkehrsdichte, Fahrgeschwindigkeiten, Fahrzeugabstände, Tageszeit, Kalenderzeit und Fahrzeugtypologie vorgesehen. Hierdurch kann je nach Verkehrsdichte, Fahrgeschwindigkeiten, Fahrzeugabstände, Tageszeit, Kalenderzeit oder Fahrzeugtypologie eine optimale Straßen- bzw. Tunnelausleuchtung erzielt und für verschiedene Verkehrssituationen gleichermaßen eine möglichst blendungsfreie, kontrastreiche Fahrbahnausleuchtung erreicht werden, ohne hierbei zu große Effizienzverluste in Kauf nehmen zu müssen. Die Fahrgeschwindigkeiten können dabei einzeln und/oder in Form einer mittleren Fahrgeschwindigkeit und die Fahrzeugabstände ebenfalls einzeln und/oder in Form eines mittleren Fahrzeugabständs berücksichtigt werden. Als Fahrzeugtypologie können insbesondere LKW- und/oder PKW- und/oder Motorradanteile am passierenden Verkehr berücksichtigt werden. Durch die dynamische Anpassung der insgesamt erzeugten Lichtstärkeerteilung und Hauptabstrahlrichtung des Leuchtensystems an sich ergebende Änderungen der Verkehrssituation und deren zyklische Schwankungen kann auch bei an sich gleichbleibender Fahrtrichtung die Ausleuchtung der Fahrbahn rasch so verändert werden, dass sie für die Fahrer stets bestmöglich hohen Kontrast mit Blendungsfreiheit vereint.

Dabei ist die Straßenleuchte hinsichtlich der von ihr bewirkten Lichtstärkeverteilung derart variabel ausgebildet, dass die Straßenleuchte wahlweise die Straße oder eine Fahrbahn eher mehr nach dem Gegenstrahlprinzip oder eher mehr nach dem Mitstrahlprinzip und nach einer Mischform dieser beiden Bestrahlungsprinzipien ausleuchten kann. Bei einer Ausleuchtung der Fahrbahn beziehungsweise des Tunnels nach dem Mitstrahlprinzip strahlen die Leuchtenbausteine im Wesentlichen in Fahrtrichtung beziehungsweise nur spitzwinklig zur Fahrtrichtung geneigt ab, sodass ein in Fahrtrichtung betrachtet vor dem jeweiligen Leuchtbaustein liegender Halbraum ausgeblendet beziehungsweise abgeblendet ist. Im Gegensatz hierzu strahlen die Leuchtenbausteine beim Ausleuchten im Gegenstrahlprinzip im Wesentlichen entgegen der Fahrtrichtung, gegebenenfalls unter Einschluss eines spitzen Winkels hierzu, ab, sodass in Fahrtrichtung betrachtet ein jeweils hinter dem Leuchtenbaustein liegender Halbraum abgeblendet ist. Um beide Bestrahlungsprinzipien gleichermaßen realisieren zu können, kann die Straßenleuchte sowohl zumindest einen Leuchtenbaustein, der nach dem Mitstrahlprinzip abstrahlt, als auch zumindest einen Leuchtenbaustein, der nach dem Gegenstrahlprinzip abstrahlt, besitzen, sodass in einfacher Weise durch Umschalten zwischen den Leuchtenbausteinen, das heißt Betreiben nur des Gegenstrahl-Leuchtenbausteins oder Betreiben nur des Mitstrahl-Leuchtenbausteins zwischen den genannten beiden Beleuchtungsprinzipien umgeschaltet werden kann. Zusätzlich kann durch gleichzeitiges Betreiben beider Gruppen von Leuchtenbausteinen, das heißt Mitstrahl- und Gegenstrahl-Leuchtenbausteinen, eine Mischform dieser Beleuchtungsprinzipien realisiert werden, wobei insbesondere auch eine symmetrische Tunnel- beziehungsweise Fahrbahnbeleuchtung vorgesehen werden kann, bei der die Straßenleuchte symmetrisch in und gegen die Fahrtrichtung und in etwa halbräumlich abstrahlt. Bei Verwendung einer entsprechenden Anzahl an Leuchtenbausteinen kann die Gesamt-Lichtstärkeverteilung fein von mehr Mitstrahlprinzip hin zu mehr Gegenstrahlprinzip und umgekehrt in einfacher Weise variiert werden.

Der genannte Umschalter kann dabei das Beleuchten der Fahrbahn beziehungsweise der Straße von mehr Mitstrahlprinzip auf mehr Gegenstrahlprinzip und/oder umgekehrt von Gegenstrahlprinzip auf Mitstrahlprinzip in Abhängigkeit zumindest eines der vorgenannten Parameter Verkehrsdichte, Fahrgeschwindigkeiten, Fahrzeugabstände, Tageszeit, Kalenderzeit oder Fahrzeugtypologie umschalten, wobei durch Berücksichtigung mehrerer oder aller dieser Parameter eine umfassende und feinsinnige Anpassung der Gesamt-Hauptabstrahlrichtung erzielt werden kann. Gegebenenfalls kann der Umschalter dabei auch noch weitere Parameter berücksichtigen, beispielsweise die jeweilige Tageslichtsituation, die durch eher mehr strahlenden Sonnenschein oder eher diffuses Licht und/oder größere oder kleinere Helligkeiten bzw. Lichtstärken und/oder verschiedene Lichtfarben und/oder bei ziehenden Wolken durch verschieden starke bzw. verschieden schnelle Veränderungen der Helligkeiten oder Lichtfarben gekennzeichnet sein kann.

Gemäß der Erfindung kann hierbei nicht nur im Sinne eines digitalen Umschaltens zwischen 100% Mitstrahlprinzip auf 100% Gegenstrahlprinzip und umgekehrt umgeschaltet werden, sondern auch graduelle Zwischenbetriebsstellungen eingestellt werden, die teilweise das Gegenstrahlprinzip und teilweise das Mitstrahlprinzip realisieren, beispielsweise im Sinne von 70% Mitstrahlprinzip und 30% Gegenstrahlprinzip.

Um hier eine möglichst feine, für viele Verkehrssituationen passende Ausleuchtung erreichen zu können, kann der genannte Umschalter nach Art eines Dimmers eine stufenlose Verstellbarkeit der Gesamtlichtstärkeverteilung vorsehen, sodass graduell beziehungsweise stufenlos die Straßenleuchte von Mitstrahlprinzip hin zu Gegenstrahlprinzip und umgekehrt eingestellt werden kann. Eine solche stufenlose beziehungsweise feinstufige Einstellung der Lichtstärkeverteilung kann bei einer sehr großen Anzahl von Leuchtenbausteinen, die nach Art einer Leuchtenbaustein-Matrix oder einer Leuchtenbaustein-Aufreihung beziehungsweise - Hintereinanderreihung angeordnet sein können, dadurch erreicht werden, dass nach und nach eine immer größere Anzahl von Leuchtenbausteinen, die eine bestimmte Strahlungsrichtung beziehungsweise einen bestimmten Strahlungsraum haben, zugeschaltet werden. Soll beispielsweise von 100% Mitstrahlprinzip auf ein 70% Mitstrahlprinzip mit 30% Gegenstrahlprinzip übergegangen werden, kann beispielsweise bei einer Straßenleuchte mit insgesamt 200 Leuchtenbausteinen, von denen 100 Leuchtenbausteine Mitstrahl-Leuchtenbausteine sind und 100 Leuchtenbausteine Gegenstrahl-Leuchtenbausteine sind, zunächst nur die 100 Mitstrahl-Leuchtenbausteine leuchten, während dann nach und nach 30 Mitstrahl-Leuchtenbausteine abgeschaltet und gleichzeitig nach und nach 30 Gegenstrahl-Leuchtenbausteine zugeschaltet werden.

Alternativ oder zusätzlich zu einem solchen Zu- und Abschalten einzelner Leuchtenbausteine und Veränderung der Anzahl der jeweils in eine Richtung strahlender Leuchtenbausteine kann eine stufenlose beziehungsweise fein- oder mehrstufige Einstellung der Lichtstärkeverteilung auch durch ein tatsächliches Dimmen der einzelnen Bausteine erzielt werden, beispielsweise dergestalt, dass bei dem vorherigen Beispiel die 100 Mitstrahl-Leuchtenbausteine nach und nach auf 70% ihrer Leistung heruntergedimmt werden, während die 100 Gegenstrahl-Leuchtenbausteine nach und nach von 0% auf 30% Strahlleistung hochgefahren werden.

Der genannte Umschalter kann dabei grundsätzlich verschieden ausgebildet sein. Dabei weist der Umschalter einen automatischen Betätiger zum automatischen Umschalten von Mitstrahlprinzip auf Gegenstrahlprinzip und umgekehrt auf, der den genannten Umschalter automatisch in Abhängigkeit zumindest eines der vorgenannten Parameters betätigt, wobei der genannte Betätiger vorteilhafterweise als Regler ausgebildet sein kann. Der genannte Betätiger kann dabei in der beschriebenen Weise nicht nur von 100% Mitstrahlprinzip auf 100% Gegenstrahlprinzip schalten, sondern auch wie erläutert stufenlos oder feinstufig Zwischenstellungen beziehungsweise dazwischenliegende Lichtstärkeverteilungen einstellen.

Zusätzlich kann der Umschalter auch ein händisch betätigbares Eingabemittel beispielsweise in Form eines Drehknopfs oder eines Schiebers oder eines per Mausklick verschiebbaren Reglerbalkens umfassen, um händisch die Regelung bzw. automatische Steuerung einjustieren bzw. kalibrieren zu können und/oder Grenzen für den maximalen und/oder minimalen Gegenstrahlanteil und/oder Mitstrahlanteil festlegen zu können oder auch bei Ausfall des automatischen Betätigers eine händisch gesteuerte Einstellung der Lichtstärkeverteilung beziehungsweise des Beleuchtungsprinzips zu ermöglichen. Hierdurch kann beispielsweise auch eine in einem Verkehrsleitzentrum beschäftigte Person eine Tunnelbeleuchtung je nach Tageszeit und/oder Verkehrsaufkommen von Mitstrahlprinzip auf Gegenstrahlprinzip oder umgekehrt umstellen.

Der automatische Betätiger kann hierbei insbesondere in Abhängigkeit der vorgenannten Parameter wie Verkehrsdichte, durchschnittlicher Fahrzeuggeschwindigkeit und/oder Tageszeit arbeiten, und ggf. zusätzlich auch in Abhängigkeit weiterer Parameter wie der Fahrtrichtung und/oder im Tunnel beziehungsweise auf der Straße verbleibendem Tageslicht arbeiten.

Die genannten Verkehrssituationsparameter können hierbei von einer geeigneten Sensoreinrichtung erfasst werden, die die Verkehrsdichte und/oder die mittlere Fahrzeuggeschwindigkeit und/oder die vorherrschende Fahrzeugtypologie und/oder die Fahrtrichtung und/oder die Tageslichtstärke auf der Fahrbahn erfassen und/oder die Tageszeit messen bzw. bereitstellen und/oder die Kalenderzeit bereitstellen kann. Eine solche Sensoreinrichtung kann in die Straßenleuchte integriert sein, sodass die Straßenleuchte und die Steuervorrichtung zum Steuern der Lichtstärkeverteilung ein autarkes, in die Straßenleuchte integriertes System bilden kann. Alternativ oder zusätzlich können die genannten Parameter jedoch auch von einem von der Straßenleuchte separaten Verkehrsüberwachungssystem bereitgestellt werden, wie es oft zur Tunnelüberwachung und/oder Überwachung des Straßenverkehrs auf viel befahrenen Straßen wie Autobahnen bereits vorhanden ist. Der genannte Betätiger kann eine Datenschnittstelle beziehungsweise einen geeigneten Signaleingang aufweisen, über die beziehungsweise über den das Sensorsignal des separaten Verkehrsüberwachungssystems zugeleitet werden kann.

Die automatische Betätigung des Umschalters zum Umschalten zwischen verschiedenen Betriebsmodi kann dabei grundsätzlich in verschiedener Weise die genannten Verkehrssituationsparameter berücksichtigen, beispielsweise in Abhängigkeit nur eines der genannten Parameter oder auch unter Berücksichtigung mehrerer Parameter gleichzeitig. Es können auch verschiedene Parameter zu verschiedenen Zeiten berücksichtigt werden bzw. einzelne Parameter nur zu bestimmten Zeiten berücksichtigt werden. Soweit mehrere Parameter gleichzeitig berücksichtigt werden, die ggf. widersprüchliche Einflüsse auf die Lichtstärkeverteilung hätten, kann einem Parameter Vorrang vor zumindest einem weiteren Parameter gegeben werden und/oder es kann die Wirkung des einen Parameters abgeschwächt werden und/oder es können die Einflüsse auf mehr Mitstrahl- oder mehr Gegenstrahlprinzip miteinander verrechnet werden, wobei die Parameter mit gleicher oder verschiedener Gewichtung berücksichtigt werden können, so dass ggf. bei einer substantiellen gegenseitigen Einflusskompensation bspw. eine ausgewogene Mischung aus Gegenstrahl- und Mitstrahlprinzip vorgesehen werden kann

Vorteilhafterweise kann der automatische Betätiger Betätigungsmittel umfassen, die mit zunehmender Verkehrsdichte zunehmend mehr Mitstrahlprinzip einstellen, insbesondere derart, dass bei höherer Verkehrsdichte mehr Licht nach dem Mitstrahlprinzip und/oder weniger Licht nach dem Gegenstrahlprinzip und bei geringerer Verkehrsdichte weniger Licht nach dem Mitstrahlprinzip und/oder mehr Licht nach dem Gegenstrahlprinzip auf die Fahrbahn gestrahlt wird. Einer solchen Steuerung der Lichtstärkeverteilung liegt die Überlegung zugrunde, dass bei weniger Verkehrsdichte größere Fahrzeugabstände vorliegen, die zu weniger Verschattung führen, und zugleich das Unfallrisiko absinkt, sodass die höhere Effizienz des Gegenstrahlprinzips durch die Lichtspiegelung an der Fahrbahnoberfläche genutzt werden kann, während bei zunehmender Verkehrsdichte und abnehmenden Fahrzeugabständen die Effizienz der Straßenleuchte in den Hintergrund tritt und eine möglichst gute Ausleuchtung der Rückseiten vorausfahrender Fahrzeuge erreicht werden soll.

Alternativ oder zusätzlich zu einer solchen Berücksichtigung der Verkehrsdichte kann auch in Abhängigkeit der Fahrgeschwindigkeiten umgeschaltet werden, insbesondere derart, dass bei höheren Fahrgeschwindigkeiten mehr Licht nach dem Mitstrahlprinzip und/oder weniger Licht nach dem Gegenstrahlprinzip und bei niedrigeren Fahrgeschwindigkeiten weniger Licht nach dem Mitstrahlprinzip und/oder mehr Licht nach dem Gegenstrahlprinzip auf die Fahrbahn gestrahlt wird. Vorteilhafterweise kann alternativ oder zusätzlich hierzu auch in Abhängigkeit der Tageszeit die Hauptabstrahlrichtung variiert werden, insbesondere derart, dass in den Nachmittagsstunden, insbesondere zwischen 13 Uhr und 16 Uhr, mehr Licht nach dem Mitstrahlprinzip und/oder weniger Licht nach dem Gegenstrahlprinzip und/oder in frühen Morgenstunden, insbesondere zwischen 2 Uhr und 6 Uhr, weniger Licht nach dem Mitstrahlprinzip und/oder mehr Licht nach dem Gegenstrahlprinzip auf die Fahrbahn gestrahlt wird. Einer solchen Regelung bzw. Steuerung der Hauptabstrahlrichtung bzw. Lichtstärkeverteilung liegt die Überlegung zugrunde dass zumindest statistisch betrachtet in den frühen Morgenstunden meist junge Nachtschwärmer, die aufgrund Ihrer Augenleistung weniger leicht geblendet sind, mit normalerweise vergleichsweise höheren Geschwindigkeiten und erhöhter Risikobereitschaft bei gleichzeitig geringerer Verkehrsdichte unterwegs sind, so dass mit mehr Gegenstrahlbeleuchtung ein erhöhter Kontrast bessere Sicherheit erzielen kann, während in den genannten Nachmittagsstunden üblicherweise vergleichsweise mehr ältere Fahrer mit tendenziell geringeren Geschwindigkeiten oder Autofahrer mit erhöhter Müdigkeit und verlangsamten Reaktionszeiten unterwegs sind, deren Augen leichter geblendet sind, so dass hier mit mehr Mitstrahlprinzip eine sicherere Ausleuchtung erzielt werden kann.

Mit einer solchen tageszeitabhängigen Steuerung der Lichtstärkeverteilung können insbesondere auch Effekte der zirkadianen Rhythmik wie z.B. eine generell langsamere Reaktionszeit in den Nachmittags- oder Nachtstunden berücksichtigt werden.

Alternativ oder zusätzlich kann die Hauptabstrahlrichtung auch in Abhängigkeit der Fahrzeugtypologie variiert werden derart, dass bei höherem LKW-Anteil mehr Licht nach dem Mitstrahlprinzip und/oder weniger Licht nach dem Gegenstrahlprinzip und bei geringerem LKW-Anteil weniger Licht nach dem Mitstrahlprinzip und/oder mehr Licht nach dem Gegenstrahlprinzip auf die Fahrbahn gestrahlt wird. Bei höheren LKW-Anteilen wird tendenziell mit geringeren Geschwindigkeiten bei geringerem Abständen ("Brummi-Karawane") gefahren, so dass es hier vorteilhaft sein kann, mit tendenziell mehr Mitstrahllicht zu beleuchten, während bei höherem PKW- oder Motorradanteil mehr Gegenstrahlprinzip vorteilhaft sein kann.

Ferner kann auch die Kalenderzeit berücksichtigt werden, insbesondere dahingehend, dass in den Sommer- und/oder Urlaubsmonaten und/oder an Wochenenden mehr Licht nach dem Mitstrahlprinzip und/oder weniger Licht nach dem Gegenstrahlprinzip und bei geringerer Verkehrsdichte weniger Licht nach dem Mitstrahlprinzip und/oder mehr Licht nach dem Gegenstrahlprinzip auf die Fahrbahn gestrahlt wird. Einer solchen Steuerung bzw. Regelung liegt die Überlegung zugrunde, dass In den Sommermonaten bzw. den Ferienzeiten, insbesondere an den verkehrsreichen Reisewochenenden der Hauptreisezeit, generell tendenziell unaufmerksamer gefahren wird und höhere Verkehrsdichten auftreten, so dass mehr Mitstrahlprinzip eine höhere Sicherheit erzielen kann.

Alternativ oder zusätzlich kann auch ein Sensorsignal berücksichtigt werden, das die Tageslichtstärke beziehungsweise Umgebungshelligkeit berücksichtigt, wobei insbesondere bei höheren Tageslichtstärken mehr Licht nach dem Gegenstrahlprinzip und/oder weniger Licht nach dem Mitstrahlprinzip und bei geringeren Tageslichtstärken mehr Licht nach dem Mitstrahlprinzip und/oder weniger Licht nach dem Gegenstrahlprinzip auf die Fahrbahn gestrahlt werden kann. Ein solcher Steuerungsalgorithmus geht von der Überlegung aus, das bei hohen Tageslichtstärken mehr Licht nach dem Gegenstrahlprinzip noch nicht gleich zu einer Blendung der Fahrzeugführer führt, da die Augen an das grelle Tageslicht noch gewöhnt sind. Eine solche Berücksichtigung der Tageslichtstärke kann beispielsweise am Tunneleingang erfolgen, insbesondere dergestalt, dass am Tunneleingang noch mehr nach dem Gegenstrahlprinzip beleuchtet wird, während in der Innenstrecke des Tunnels mehr nach dem Mitstrahlprinzip beleuchtet wird. Fällt das Tageslicht beziehungsweise Umgebungslicht aus, beispielsweise in der Nacht, können auch die Tunneleingänge wie die Innenstrecke nach dem Mitstrahlprinzip beziehungsweise stärker nach dem Mitstrahlprinzip beleuchtet werden.

In vorteilhafter Weiterbildung der Erfindung ist die Straßenleuchte nicht nur hinsichtlich ihrer Lichtstärkeverteilung, insbesondere nach dem Mit- und Gegenstrahlprinzip variabel, sondern auch hinsichtlich ihrer Lichtfarbe bzw. - im Falle von LEDs - hinsichtlich ihrer ähnlichsten Farbtemperatur. Vorteilhafterweise ist hierbei eine Farbsteuervorrichtung zum Steuern der Lichtfarbe in Abhängigkeit eines Straßenverkehrsparameters ausgewählt aus der Gruppe Verkehrsdichte und Tageslichtstärke vorgesehen.

Die genannte Farbsteuervorrichtung kann hierbei insbesondere vorsehen, dass bei hohen Tageslichtstärken beziehungsweise Umgebungslichtstärken mehr weißes Licht oder weißeres Licht bzw. eine ähnlichste Farbtemperatur von 4000 Kelvin oder mehr und bei geringeren Tageslichtstärken mehr gelbes und/oder mehr rotes und/oder gelberes und/oder rötlicheres Licht bzw. eine ähnlichste Farbtemperatur von weniger als 4000 Kelvin abgegeben wird. Die Änderung der Lichtfarbe zu mehr rötlichem Licht hin kann insbesondere am Abend und in der Nacht zu einer geringeren Blendungswirkung führen, während bei mehr weißem Licht untertags der Übergang beim Einfahren in einen Tunnel oder beim Ausfahren aus dem Tunnel als weniger unangenehm empfunden wird.

Alternativ oder zusätzlich kann die Farbsteuervorrichtung auch vorsehen, bei höheren Verkehrsdichten mehr weißes Licht und bei geringeren Verkehrsstärken gelberes oder rötlicheres Licht vorzusehen.

Des Weiteren kann die Lichtfarbe der Tunnelbeleuchtung in Abhängigkeit von der Außensituation geändert werden. Beispielsweise kann bei fehlendem Tageslicht die Lichtfarbe in Tunnels reduziert werden (warmweißes Licht am Abend / in der Nacht gegenüber neutralweißem Licht am Tag). Dies begründet sich mit einer erhöhten Präferenz der Menschen für wärmeres Licht bei fehlendem Tageslicht.

Daraus ergeben sich insgesamt verschiedene Optionen für verschiedene Betriebsmodi einer adaptiven Tunnelbeleuchtung:
- Mitstrahlbeleuchtung zu Rush-Hour-Stunden am frühen Morgen und Abend,
- Mitstrahlbeleuchtung zu Zeiten mit erhöhten LKW-Anteilen (z.B. >15% LKW-Anteil),
- Mitstrahlbeleuchtung bei höheren erlaubten Fahrgeschwindigkeiten,
- Mitstrahlbeleuchtung im Baustellenbetrieb,
- Mitstrahlbeleuchtung zu Urlaubszeiten während des Tages,
- Mischformen zwischen Gegenstrahlbeleuchtung und Mitstrahlbeleuchtung während des Tages mit plötzlich erhöhtem Verkehrsaufkommen,
- symmetrische Beleuchtung während des Tages außerhalb der Rush-hour-Zeiten an Arbeitstagen,
- symmetrische Beleuchtung während des Tages bei reduziertem Verkehrsaufkommen,
- Gegenstrahlbeleuchtung während der Nacht,
- Mischformen zwischen Mitstrahlbeleuchtung und Gegenstrahlbeleuchtung in den späten Abendstunden bei reduziertem Verkehrsaufkommen.

Um die Straßenleuchte für verschiedene Straßen- beziehungsweise Tunnelsituationen herrichten und daran anpassen zu können, besitzt die Straßenleuchte gemäß einem weiteren Aspekt der Erfindung einen modularen Aufbau, wobei die Leuchtenbausteine mit verschiedenen Hauptabstrahlrichtungen gegeneinander austauschbar sind, sodass die Straßenleuchte mit verschiedenen Gesamtstrahlungsräumen mit verschiedenen Gesamtlichtstärkeverteilungen konfigurierbar ist. Durch einen solchen modularen Aufbau, der mehrere, verschiedene Anordnungen von Leuchtenbausteinen zulässt, kann die Leuchte in einfacher Weise an den jeweiligen Einsatzort angepasst werden, was unabhängig von der vorerläuterten automatischen Lichtstärkeverteilungsregelung bzw. -steuerung von Vorteil sein kann. Beispielsweise können für einen stets nur in eine Richtung befahrenen Tunnel, der stets hoher Verkehrsdichte unterliegt, ausschließlich oder überwiegend Leuchtenbausteine eingesetzt werden, die die Fahrbahn nach dem Mitstrahlprinzip ausleuchten. Wird umgekehrt ein Einsatz der Straßenleuchte für Straßen beziehungsweise Tunnels gewünscht, die - beispielsweise bei Blockabfertigung - einmal in die eine Richtung und das nächste Mal in die entgegengesetzte Richtung befahren werden, können sowohl Leuchtenbausteine eingesetzt sein, die nach dem Mitstrahlprinzip in die eine Richtung und Leuchtenbausteine eingesetzt sein, die nach dem Mitstrahlprinzip in die entgegengesetzte Richtung leuchten.

Der modulare Aufbau mit wiederholter Umkonfigurierbarkeit der Leuchtenbausteine und/oder nachträglicher Austauschbarkeit der Leuchtenbausteine ermöglicht es, eine bereits verbaute Straßenleuchte auch nachträglich an sich ändernde Verkehrssituationen anzupassen, beispielsweise die Umwidmung eines Gegenverkehrtunnels in einen zweispurige Einbahnstraßentunnel.

Vorteilhafterweise besitzen die Leuchtenbausteine trotz verschiedener Hauptabstrahlrichtungen und/oder verschiedener Lichtstärkeverteilungen einander entsprechende Anschlussmaße, sodass die Leuchtbausteine an jedem Anschlussplatz eines Bausteinhalters montierbar sind. Der genannte Bausteinhalter kann hierbei mehrere gleichartig, insbesondere einander entsprechende Anschlussplätze besitzen, die mit den genannten Anschlussmaßen der Leuchtenbausteine kompatible Anschlussmaße aufweisen. Hierdurch kann beispielsweise ein Gegenstrahl-Leuchtenbaustein durch einen Mitstrahl-Leuchtenbaustein oder umgekehrt ersetzt werden.

Der genannte Bausteinhalter kann vorteilhafterweise ein Leuchtengehäuse bilden, das die Leuchtenbausteine rückseitig abdeckt, wobei das Leuchtengehäuse eine Schiebeführung aufweisen kann, in die die Leuchtenbausteine eingeschoben werden können. Hierdurch können die Leuchtenbausteine in einfacher Weise in nahezu beliebiger Anordnung montiert werden, da lediglich die gewünschten Leuchtenbausteine nacheinander in die genannte Schiebeführung eingeschoben zu werden brauchen.

Insbesondere sind die Leuchtenbausteine und der genannte Bausteinhalter dabei derart ausgebildet, dass die Leuchtenbausteine jeweils in zwei um 180 Grad zueinander verdrehten Ausrichtungen einsetzbar sind. Hierdurch können an sich gleichartig ausgebildete Leuchtenbausteine gleichermaßen als Mitstrahl-Leuchtenbaustein und Gegenstrahl-Leuchtenbaustein verwendet werden. Die Festlegung, ob ein Leuchtenbaustein als Mitstrahl-Leuchtenbaustein oder Gegenstrahl-Leuchtenbaustein genutzt wird, erfolgt durch Verdrehung um 180 Grad.

Um eine hohe Variabilität der Lichtstärkeverteilungen und der Beleuchtungsprinzipien, mit der eine Straße beleuchtet wird, mit einer möglichst kleinen Anzahl verschiedener Leuchtenbausteine zu erreichen, können in vorteilhafter Weiterbildung der Erfindung vier hinsichtlich ihrer Lichtstärkeverteilung verschiedene Typen von Leuchtenbausteinen vorgesehen sein, wobei ein erster Leuchtenbaustein eine erste Fahrspur nach dem Mitstrahlprinzip beleuchtet, ein zweiter Leuchtenbaustein eine zweite Fahrspur nach dem Mitstrahlprinzip beleuchtet, ein dritter Leuchtenbaustein die genannte erste Fahrspur nach dem Gegenstrahlprinzip beleuchtet und ein vierter Leuchtenbaustein die genannte zweite Fahrspur nach dem Gegenstrahlprinzip beleuchtet. Hierdurch können zwei nebeneinanderliegende Fahrspuren wahlweise nach dem Mitstrahlprinzip oder nach dem Gegenstrahlprinzip oder nach einer Mischform, insbesondere symmetrisch in und entgegen der Fahrtrichtung, beleuchtet werden.

Um eine hohe Variabilität bezüglich der Lichtstärkeverteilung mit einer relativ kleinen Anzahl von Gruppen von Leuchtbausteinen erreichen zu können, kann in Weiterbildung der Erfindung vorgesehen sein, kann die Leuchtenbausteine jeweils einen Viertel- oder Achtelraum bestrahlen, wobei ein Leuchtenbaustein mit seinem als Viertel- oder Achtelraum ausgebildeten Strahlungsraum eine Hauptabstrahlrichtung besitzen kann, die der Fahrtrichtung entgegengerichtet ist. Zumindest ein weiterer Leuchtenbaustein kann als Strahlungsraum ebenfalls einen Viertel- oder Achtelraum besitzen, dessen Hauptabstrahlrichtung mit der Fahrtrichtung mitgehend gerichtet ist.

Mit solchen Viertelraumstrahlern kann ein Tunnel wahlweise gleichmäßig nach dem Mitstrahlprinzip oder gleichmäßig nach dem Gegenstrahlprinzip beleuchtet werden, je nach Orientierung der Montage des Leuchtenbausteins. Bei Ausbildung des Leuchtenbausteins, sodass dessen Strahlungsraum ein Achtelraum ist, kann ein mehrspuriger Tunnel beziehungsweise eine mehrspurige Straße fahrspurenweise individuell beleuchtet werden. Insbesondere kann mit einer Anordnung von vier Leuchtenbausteinen ein zweispuriger Tunnel oder eine zweispurige Straße fahrspurenweise unabhängig voneinander wahlweise nach dem Gegenstrahlprinzip oder nach dem Mitstrahlprinzip beleuchtet werden.

In Weiterbildung der Erfindung kann jeder Leuchtenbaustein jeweils einen im Wesentlichen kegel- oder keulenförmigen Strahlungsraum besitzen, dessen Hauptachse spitzwinklig zu oder entgegen der Fahrtrichtung geneigt ist. Der Strahlungsraum bildet sozusagen eine Beleuchtungskeule, die - grob gesprochen - einen sozusagen unregelmäßigen Kegel bilden kann. Mit anderen Worten wird von den Leuchtenbausteinen jeweils ein Lichtkegel - der nicht im mathematischen Sinne exakt kreiskegelförmig zu sein braucht, sondern auch unregelmäßige Querschnitte besitzen und sozusagen eine Keule bilden kann - abgestrahlt, dessen Hauptachse bei Deckenmontage der Leuchte leicht abschüssig nach unten in oder entgegen der Fahrtrichtung und bei Seitenwandmontage schräg nach unten vorne in oder schräg nach unten hinten entgegen der Fahrtrichtung geneigt ist. Insbesondere kann bei Positionierung der Leuchte oberhalb der Fahrbahn, insbesondere an der Tunneldecke, der Strahlungsraum eines jeden Leuchtenbausteins schräg nach unten auf die Fahrbahn geneigt im Wesentlichen in oder entgegen der Fahrtrichtung ausgerichtet den Tunnelraum beleuchten.

Dabei kann die Lichtstärkeverteilung insbesondere dergestalt ausgebildet sein, dass der Lichtkegel bzw. die Strahlungskeule nur eine begrenzte Aufweitung besitzt und in vertikalen Schnittebenen betrachtet einen im Wesentlichen spitzwinkligen Strahlungssektor definiert, der vorteilhafterweise weniger als 75°, vorzugsweise 60° oder weniger Öffnungswinkel besitzt.

Dabei kann die Abstrahlungskeule derart ausgerichtet und ausgebildet sein, dass ein Lichtstärkemaximum bei einem Winkel von etwa 15° bis 75°, insbesondere bei etwa 60° bis 70° zur Vertikalen auftritt. Dies ist ein sehr guter Kompromiss dahingehend, dass einerseits eine hervorragende Ausleuchtung erreicht wird, andererseits jedoch keine übermäßige Blendung eintritt, sondern nur eine im Rahmen der gesetzlichen Vorschriften noch zulässige Blendung eintritt.

In Weiterbildung der Erfindung ist dabei die den Leuchtmitteln zugeordnete Optik derart beschaffen, dass die Lichtstärkeverteilung auch innerhalb des ausgeleuchteten Halbraums über den Betrachtungswinkel gemessen zur Fahrtrichtung variiert. Insbesondere ist vorteilhafterweise vorgesehen, dass die Lichtstärkeverteilung in verschiedenen vertikalen Ebenen, die zur Fahrtrichtung unterschiedlich stark verdreht sind, voneinander abweichen, insbesondere dergestalt, dass in vertikalen Ebenen, die zur Fahrtrichtung unter einem Winkel von mehr als 45° gedreht sind, d.h. schon recht stark quer orientiert sind, deutlich kleinere Lichtstärken vorliegen als in vertikalen Ebenen, die zur Fahrtrichtung nur um einen Winkel zwischen 15° und 30° gedreht sind. Vorteilhafterweise ist die Lichtstärkeverteilung derart getroffen, dass eine maximale Lichtstärke in einer vertikalen Ebene auftritt, die von der Fahrtrichtung nur wenig divergiert, in jedem Falle zur Fahrtrichtung unter einem Winkel von weniger als 45°, vorzugsweise weniger als 30° gedreht ist.

Um eine weitgehend völlige Blendungsfreiheit zu erzielen, besitzt in Weiterbildung der Erfindung die Leuchte in ihrem Ausblendbereich, der den in Fahrtrichtung betrachtet vor der Leuchte liegenden Halbraum oder - je nach Orientierung des jeweiligen Leuchtenbausteins - den hinter der Leuchte liegenden Halbraum umfasst, eine mittlere Leuchtdichte von weniger als 200 cd/m², vorzugsweise weniger als 100 cd/m².

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Explosionsdarstellung einer Straßenleuchte nach einer vorteilhaften Ausführung der Erfindung, wobei in Fig. 1 nur einer der Leuchtenbausteine der Straßenleuchte dargestellt ist,
- Fig. 2:: eine perspektivische Explosionsdarstellung ähnlich Fig. 1 mit einer Gegenüberstellung von vier verschiedenen Leuchtenbausteinen, die aufgrund des modularen Aufbaus der Straßenleuchte variabel und wahlweise im Leuchtengehäuse montierbar sind, wobei Mitstrahl- und Gegenstrahl-Leuchtenbausteine zum Ausleuchten von rechten und linken Fahrbahnen dargestellt sind,
- Fig. 3:: eine Darstellung der Straßenleuchte aus den vorhergehenden Figuren in einer Schnittansicht und einer perspektivischen Explosionsdarstellung einer Ausführungsvariante, bei der das Leuchtengehäuse eine Abdeckblende besitzt, um eine direkte Sichtachse in die Leuchte und deren Optik zu verhindern,

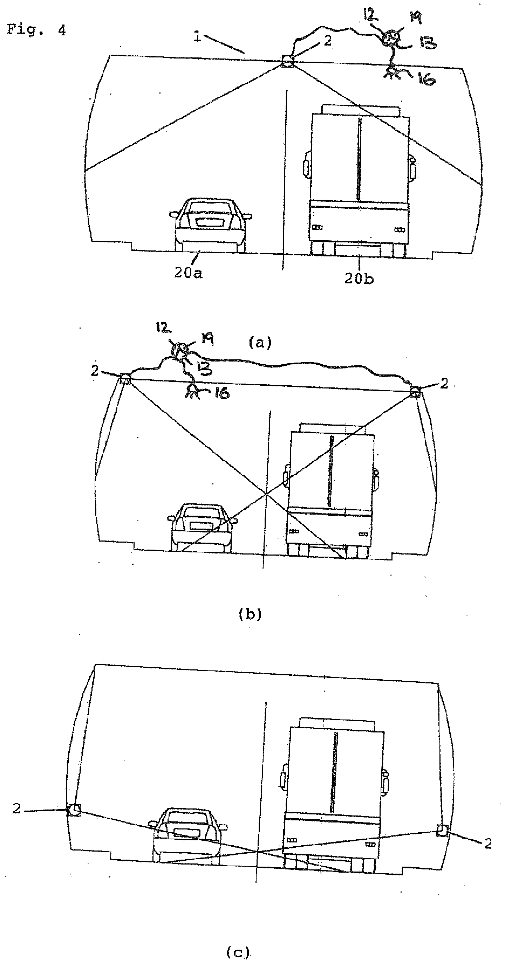

- Fig. 4:: eine Darstellung der Montageoptionen der Straßenleuchte aus den vorhergehenden Figuren, wobei drei nebeneinandergestellte Schnittansichten eines Tunnels eine symmetrische Leuchtenanordnung oberhalb der Straße, insbesondere etwa in Straßenmitte (Teilansicht a), eine asymmetrische Leuchtenanordnung in Querrichtung oberhalb der Straße rechts und links an den Straßenrändern (Teilansicht b) und eine sogenannte "Flatbeam"-Anordnung" (Teilansicht c) gezeigt sind, wobei bei der genannten Flatbeam-Anordnung die Straßenleuchte seitlich neben der Straße in eine relativ weit unten liegenden Anordnung, insbesondere etwa 0,5 bis 2 Meter über der Fahrbahndecke, angeordnet ist und einerseits die Fahrbahndecke und andererseits die Tunnelwandung beleuchtet,
- Fig. 5:: eine schematische Darstellung der Strahlungsräume einer symmetrischen Tunnelbeleuchtung mit Strahlungsräumen in und gegen die Fahrtrichtung und die hierdurch erreichte vertikale Lichtstärkeverteilung und der sich ergebende Kontrast,
- Fig. 6:: eine schematische Darstellung der Strahlungsräume bei einer Straßenbeziehungsweise Tunnelbeleuchtung nach dem Gegenstrahlprinzip und der sich hieraus ergebenden vertikalen Lichtstärkeverteilung und des erreichten Kontrasts,
- Fig. 7:: eine schematische Darstellung der Strahlungsräume einer Tunnel- beziehungsweise Straßenbeleuchtung nach dem Mitstrahlprinzip und der hierdurch erreichten vertikalen Lichtstärken und der sich ergebenden Kontrast,
- Fig. 8:: eine schematische Darstellung einer Gruppe von vier Leuchtenbausteinen einer Straßenleuchte nach einer Ausführung der Erfindung, wobei die von den vier Leuchtenbausteinen erzeugten Lichtstärkeverteilungen über zwei Fahrspuren in Bezug auf die Fahrtrichtung angegeben sind,
- Fig. 9:: eine schematische Darstellung der Anordnungs- und Betriebsmodus-Optionen der Gruppe von vier Leuchtenbausteinen aus Fig. 8,
- Fig. 10:: eine schematische Darstellung der durch die Gruppe von Leuchtenbausteinen gemäß Fig. 8 erzielbaren Leuchtcharakteristiken in einigen Beispielen, wonach das Verhältnis von Gegenstrahl- zu Mitstrahlprinzip variiert.

Die Figuren zeigen eine Straßen- und/oder Tunnelleuchte 1, die in Form eines modularen Schienensystems aufgebaut ist, das eine Vielzahl von baugleichen schienenförmigen Bausteinen umfasst, die seitlich an eine Tunnelwandung und/oder an die Tunneldecke montierbar sind, insbesondere in Form einer oder mehrerer Lichtspuren, die sich in Fahrtrichtung erstrecken. Alternativ kann die Straßenleuchte auch seitlich oder mittig oberhalb einer freiliegenden, nicht eingetunnelten Straße 20 angeordnet, beispielsweise auf Masten montiert sein. Die Straße 20 kann dabei mehrere nebeneinanderliegende Fahrspuren 20a, 20b umfassen, die beide in derselben Fahrtrichtung oder im Gegenverkehr befahrbar sein können.

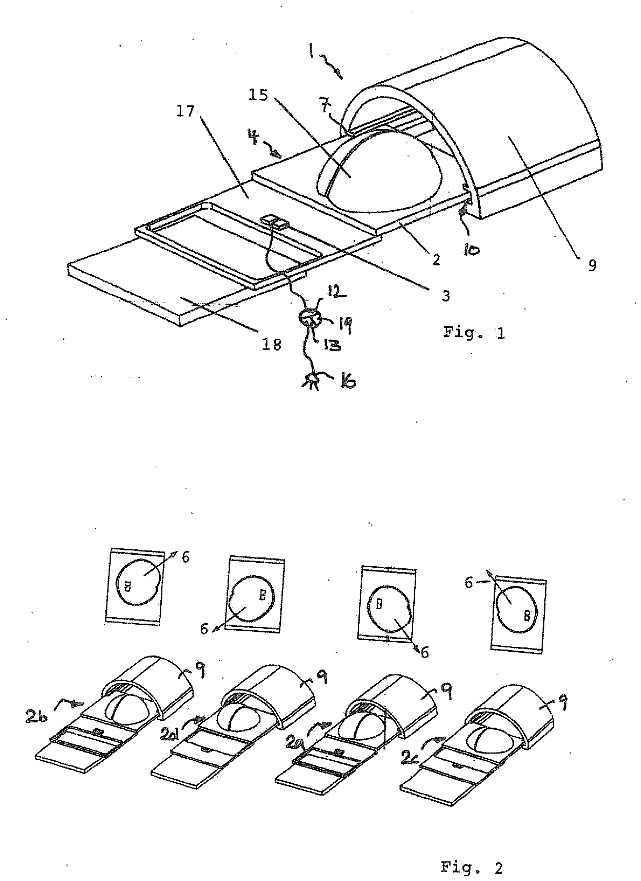

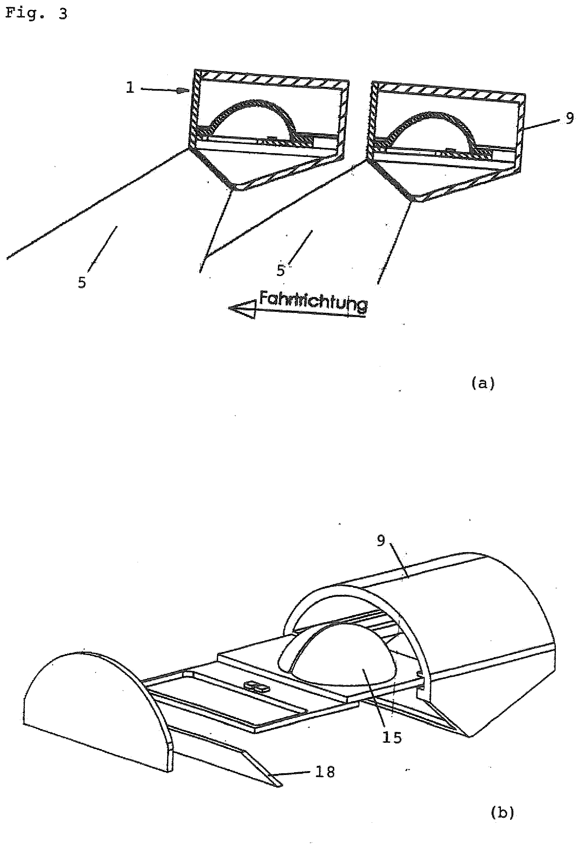

Wie die Fig. 1-3 zeigen, umfasst die Leuchte 1 hierbei vorteilhafterweise einen schienenförmigen Träger 14, auf dem in Reihe hintereinander eine Mehrzahl von Leuchtenbausteinen 2, die jeweils zumindest ein Leuchtmittel 3 bspw. in Form einer LED und zugehörige Reflektoren 15 aufweisen, montierbar sind. Anstelle der oder zusätzlich zu den Reflektoren 15 können den Leuchtmitteln auch Linsen oder generell geeignete Optiken 4 zugeordnet sein, um das von den Leuchtmitteln abgegebene Licht einzufangen und in der gewünschten Richtung und/oder mit der gewünschten Lichtstärkeverteilung abzugeben, wie noch erläutert wird.

Der genannten schienenförmige Träger 14 kann vorteilhafterweise als Endlosprofil, insbesondere Strangprofil ausgebildet sein, welches auf die jeweils gewünschte Länge ablängbar ist, so dass eine Vielzahl von Schienenmodulen hintereinander in Reihe beispielsweise an eine Tunneldecke oder -wandung montierbar sind, wobei auch mehrere Reihen nebeneinander vorgesehen sein können, beispielsweise durch mehrere schienenförmige Träger 14 nebeneinander. Alternativ oder zusätzlich zu einer solchen reihenförmigen Anordnung mit einem schienenförmigen Träger kann das Leuchtensystem jedoch auch eine andere Anordnung der Lichtquellen 2 mit zugehörigen Linsen 3 vorsehen, beispielsweise eine mehrreihige Anordnung oder eine matrixförmige Anordnung der Lichtquellen 2 mit zugehörigen Linsen 3 bei einer entsprechenden Ausbildung des Trägers 4, der dann nicht mehr schienenförmigen, sondern mehr flächig ausgebildet sein kann.

Der Träger 14 ist vorteilhafterweise als Hohlprofil ausgebildet, so dass in einem näherungsweise röhrenförmigen Innenraum elektrische Versorgungsbausteine wie Kabel und Leitungen angeordnet werden können.

Die Lichtquellen bzw. Leuchtmittel 3 können als LEDs ausgebildet sein, die auf einer Versorgungsplatine 17 montiert sein können und die übliche Auskoppel- bzw. Primärlinse umfassen können, die Teil des LED-Moduls selbst sind.

Den Leuchtmitteln 3 ist dabei eine Optik 4 zugeordnet, um das abgestrahlte Licht in gewünschter Weise - wie noch erläutert wird - gerichtet abzustrahlen. Wie die Figuren 1 und 2 zeigen, kann die genannte Optik 4 Reflektoren 15 umfassen, wobei jeweils einer Lichtquelle beziehungsweise einer Gruppe von Lichtquellen 2 ein Reflektor 15 zugeordnet ist, um das Licht einzufangen und abzustrahlen. Anstelle oder zusätzlich zu einem solchen Reflektor 15 könnte den Lichtquellen 3 jedoch auch eine Linse zugeordnet sein, um das Licht einzufangen und in gewünschter Weise abzustrahlen.

Wie Fig. 1 zeigt, können vorteilhafterweise die Leuchtmittel 3 auf einer der Straße 20 abgewandten der Platine 17 sitzen und an sich in die falsche Richtung strahlen. Der Reflektor 15 sitzt auf der straßenabgewandten Seite der Leuchtmittel 3 und fängt deren Licht ein, um es auf die Straße 20 zu lenken. Der Reflektor 15 kann dabei in spezieller Weise gewölbt beziehungsweise konturiert sein, um den gewünschten Strahlungsraum und die gewünschte Lichtstärkeverteilung zu erzielen. Dabei kann die in den Figuren gezeigte Doppelbirnen-Form vorteilhaft sein, um trotz Anordnung des Reflektors 15 auf der straßenabgewandten Seite der Leuchtmittel 3 deren Licht vollständig einzufangen und vollständig an den Leuchtmitteln 3 vorbei auf die Straße richten zu können.

Ein Abdeckglas 18, das natürlich auch aus transparentem Kunststoff bestehen kann, deckt das Leuchtmittel 3 ab beziehungsweise verschließt die Leuchte 1, vgl. Fig. 1.

Wie die Figuren 1 und 2 zeigen, besitzt die Straßenleuchte 1 dabei einen modularen Aufbau. Die genannten Reflektoren 15 können zusammen mit der LED-Platine 17 und dem zugehörigen Abdeckglas 18 in das Leuchtengehäuse 9 eingesetzt werden, wobei das genannte Gehäuse 9 den schon genannten schienenförmigen Bausteinhalter 7 bilden kann, in den die genannten Leuchtenbausteine 2 umfassend den Reflektor 15 und die LED-Platine 17 eingeschoben werden können. Der Bausteinhalter 7 beziehungsweise das Gehäuse 9 können hierzu an seitlichen Rändern eine Schiebeführung 10 besitzen, in die die Bausteine eingeschoben werden können.

Wie Fig. 2 zeigt, können dabei verschieden ausgebildete Reflektoren 15, die verschiedene Abstrahlcharakteristiken in Form von verschiedenen Strahlungsräumen 5 und/oder verschiedenen Lichtstärkeverteilungen bewirken, variabel und austauschbar zueinander eingesetzt werden.

Die einzelnen Leuchtenbausteine 2 strahlen hierbei zumindest im Wesentlichen nur in Fahrtrichtung oder - je nach Ausrichtung des Leuchtenbausteins 2 - nur entgegen der Fahrtrichtung 11 mit einer asymmetrischen Lichtstärkeverteilung dergestalt, dass nur ein Viertel- oder Achtelraumraum, der in Fahrtrichtung betrachtet hinter der jeweiligen Linse liegt, umfasst wird. Der Lichtstrom der Leuchtenbausteine wird auf einen in Fahrtrichtung betrachtet hinter der Leuchte liegenden Strahlungsraum 5a oder - je nach Ausrichtung des Leuchtenbausteins 2 - einen in Fahrtrichtung vor dem Leuchtenbaustein liegenden Strahlungsraum 5b beschränkt, so dass der jeweilige Leuchtenbaustein 2 die Fahrbahn im Wesentlichen im Mitstrahlprinzip oder im Gegenstrahlprinzip beleuchtet.

Insbesondere besitzt der jeweilige Leuchtenbaustein dabei einen Ausblendraum, der den in Fahrtrichtung betrachtet vor der Leuchte liegenden Halbraum oder - je nach Ausrichtung des Leuchtenbausteins 2 - den in Fahrtrichtung 11 hinter der leuchte liegenden Halbraum umfasst. Durch das Ausleuchten des Tunnels bzw. des Straßenbereichs im Mitstrahlprinzip in Fahrtrichtung werden vor einem bestimmten Fahrzeug herfahrende Fahrzeuge sozusagen von hinten beleuchtet, so dass sie für den dahinter herfahrenden Fahrer gut sichtbar sind, während durch Ausleuchten des Tunnels bzw. des Straßenbereichs im Gegenstrahlprinzip entgegen der Fahrtrichtung ein Fahrzeug und der vor ihm liegende Fahrbahnabschnitt von vorne her beleuchtet wird.

Wie Fig. 4 zeigt, können die Leuchtenbausteine 2 beziehungsweise die Straßenleuchte 1 relativ zur Straße 20 beziehungsweise den Fahrspuren 20a und 20b unterschiedlich positioniert werden. Wie Fig. 4a zeigt, kann die Straßenleuchte 1 symmetrisch oberhalb der Straße, insbesondere etwa oberhalb der Straßenmitte positioniert sein, um symmetrisch bezüglich der Querrichtung die Straße 20 auszuleuchten. Alternativ oder zusätzlich hierzu können die Leuchtenbausteine 2 beziehungsweise kann die Straßenleuchte 1 auch seitlich rechts und links an den Fahrbahnrändern oberhalb der Straße 20 angeordnet sein und die beiden Fahrbahnen 20a und 20b asymmetrisch zur Querrichtung ausleuchten. Wiederum alternativ oder zusätzlich können die Leuchtenbausteine 2 auch relativ weit unten seitlich an den Fahrbahnrändern angebracht sein, um nach dem sogenannten "Flatbeam"-Prinzip" einerseits flach die Straße auszuleuchten und andererseits nach oben die Tunnelwandungen auszuleuchten, vgl. Teilansicht c der Fig. 4.

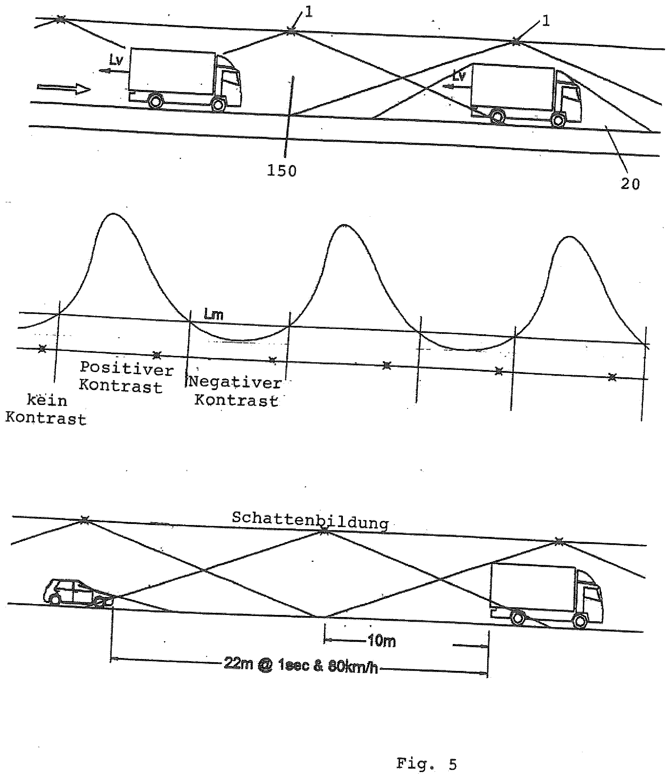

Dabei können die Leuchtenbausteine 2 in unterschiedlichen Gruppen konfiguriert werden, um verschiedene Beleuchtungsprinzipien zu realisieren, wie dies die Figuren 5 bis 7 verdeutlichen. Dabei können die Straßenleuchten 1 durch Ein- und Ausbau entsprechender Leuchtenbausteine 2 fest in der gewünschten Weise konfiguriert werden oder vorteilhafterweise kann eine Straßenleuchte 1 verschiedene Strahlungsprinzipen verwirklichende Leuchtenbausteine umfassen, die wahlweise ein- und ausgeschaltet und/oder gedimmt werden können, um die Lichtstärkeverteilung adaptiv an Straßenverkehrsparameter anzupassen, wie noch beschrieben wird.

Wie Fig. 5 zeigt, kann hierbei eine symmetrische Straßenbeleuchtung realisiert werden, gemäß der die Straßenleuchte beziehungsweise deren Leuchtenbausteine 2 in Fahrtrichtung und auch entgegen der Fahrtrichtung abstrahlen, wobei sich gegebenenfalls Strahlungsräume 15 einzelner Leuchtenbausteine zu dem in Fig. 5 gezeigten Gesamtstrahlungsraum 150 ergänzen können. Ein solcher Gesamtstrahlungsraum 150 kann dabei näherungsweise ein Halbraum sein, vgl. Fig. 5.

Bei einer solchen symmetrischen Straßenbeleuchtung mit Abstrahlen in und gegen die Fahrtrichtung kann einerseits eine gute Effizienz der Tunnelbeleuchtung erreicht werden, da die Strahlungsräume 15 auch den Spiegeleffekt des Straßenbelags ausnutzen, wodurch große Abstände der Straßenleuchten 1 realisiert werden können. Andererseits ergibt sich jedoch ein stetig wechselnder Kontrast bei der Durchfahrt zwischen positivem und negativem Kontrast, sodass zwischen den Kontrastwechseln das Sehobjekt kaum Kontrast zeigt und schwer beziehungsweise gar nicht erkennbar ist. Zudem ergeben sich hohe Flimmeramplituden in Form von sekundärem Flimmern im Cockpit eines Fahrzeugs und an den Oberflächen vorausfahrender Fahrzeuge, wie dies die Darstellung der Fig. 5 verdeutlicht.

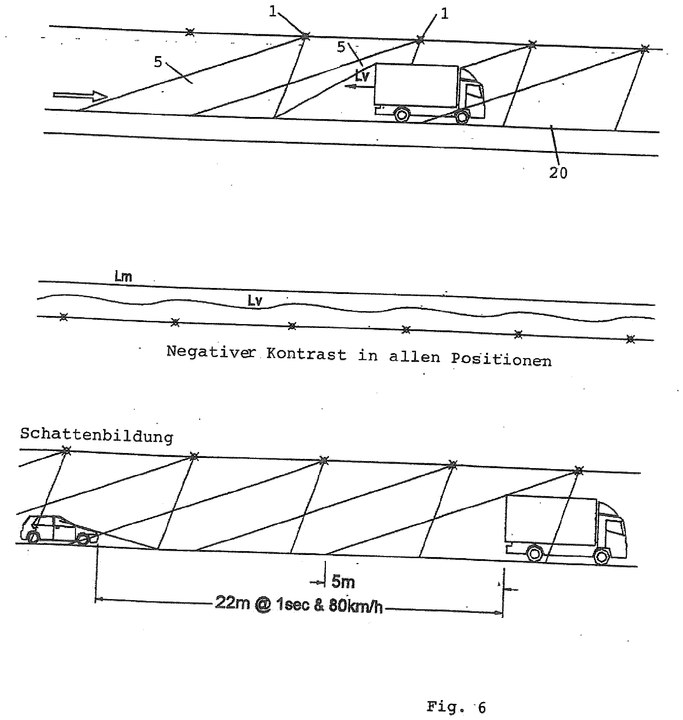

Werden die Leuchtenbausteine 2 indes derart konfiguriert, dass die Straße 2 nach dem Gegenstrahlprinzip beleuchtet wird, wie dies Fig. 6 zeigt, kann die höchste Effizienz der Beleuchtung erreicht werden, da der Spiegeleffekt der Fahrbahnoberfläche sehr gut ausgenutzt wird. Zudem kann unter der Voraussetzung von geringem Verkehrsaufkommen auch ein kleines, auf der Fahrbahnoberfläche liegendes Objekt gut erkannt werden, da sich bezüglich aller Positionen ein näherungsweise gleichbleibender negativer Kontrast ergibt, vgl. die mittlere Darstellung der Fig. 6.

Andererseits muss eine erhöhte visuelle Belastung in Form von Blendung in Kauf genommen werden. Zudem ergibt sich bei wenig Lichtstrom, dass bis auf die Fahrbahn selbst, die durch den Spiegeleffekt leuchtet, alle übrigen Flächen eines Tunnels dunkel bleiben. Zudem gilt für große Objekte auf der Fahrbahn, dass diese lange Schatten werfen und niedrige vertikale Helligkeiten besitzen, die die Rückseite von beispielsweise vorausfahrenden Fahrzeugen schlecht erkennen lassen, vgl. die untere Darstellung der Fig. 6.

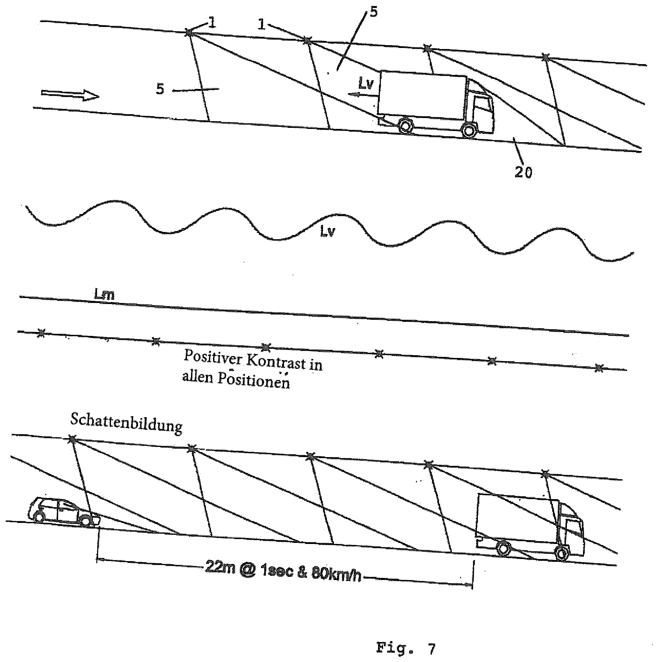

Werden die Leuchtenbausteine 2 so konfiguriert, dass die Straße 20 nach dem Mitstrahlprinzip beleuchtet wird, wie dies Fig. 7 zeigt, ergibt sich ein guter positiver Kontrast über unterschiedliche Abstände vom Betrachter, sodass eine gute Sichtbarkeit von kleinen und großen Objekten in unterschiedlichen Sehdistanzen gegeben ist. Zudem ergeben sich hohe Leuchtdichten von allen Flächen ausgenommen der Straßenoberfläche, wobei insbesondere die Rückseiten vorausfahrender Fahrzeuge hell ausgeleuchtet und gut erkennbar sind. Zudem kann eine geringe Flimmeramplitude und ein hoher visueller Komfort mit sehr geringer Blendungswirkung erzielt werden.

In Kauf zu nehmen ist bei diesem Beleuchtungsprinzip allerdings eine reduzierte Effizienz, da der Spiegeleffekt des Asphalts nicht ausgenutzt werden kann. Zudem sind kleinere Lichtpunktabstände sinnvoll, um eine homogene Fahrbahnausleuchtung zu erreichen.

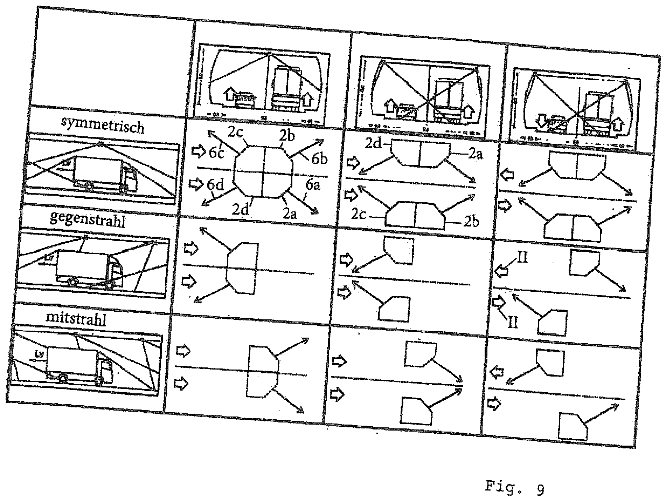

Um nun die Strahlungscharakteristik der Straßenleuchte 1 individuell an die verschiedenen Verkehrssituationen anpassen und die Vorteile der verschiedenen Beleuchtungsprinzipien variabel nutzen zu können, kann die Straßenleuchte 1 hinsichtlich ihrer Abstrahlcharakteristik vorteilhafterweise variabel gesteuert werden. Vorteilhafterweise können die Leuchtenbausteine 2 hierbei gruppenweise zusammengefasst sein beziehungsweise kann die Straßenleuchte 1 verschiedene Leuchtenbausteine 2 umfassen, die in verschiedene Richtungen strahlen beziehungsweise verschiedene Strahlungsräume 15 besitzen. Wie Fig. 9 zeigt, können insbesondere vier Leuchtenbausteine 2a, 2b, 2c und 2d vorgesehen beziehungsweise zu einer Gruppe zusammengefasst sein, von denen ein Leuchtenbaustein 2a eine rechte Fahrspur nach dem Mitstrahlprinzip ausleuchtet, ein weiterer Leuchtenbaustein 2b eine linke Fahrspur nach dem Mitstrahlprinzip beleuchtet, ein weiterer Leuchtenbaustein 2c die genannte linke Fahrspur nach dem Gegenstrahlprinzip beleuchtet und ein weiterer Leuchtenbaustein 2d die rechte Fahrspur nach dem Gegenstrahlprinzip beleuchtet. Insbesondere können die Leuchtenbausteine dabei jeweils als Strahlungsraum 15 näherungsweise einen Achtelraum ausleuchten. In der zuvor verwendeten Terminologie kann die Strahlungskeule spitzwinklig in oder gegen die Fahrtrichtung geneigt auf eine Fahrspur begrenzt sein. Jeder der Leuchtenbausteine 2 ist dabei bezüglich eines Dreiviertelraums abgeblendet.

Wie Fig. 9 zeigt, ergeben sich hierdurch verschiedene Optionen für die erzeugte Abstrahlcharakteristik beziehungsweise die erzeugten Lichtstärkeverteilungen. Sind alle vier Leuchtenbausteine in Betrieb, vgl. linke Spalte oben, kann eine symmetrische Straßenbeleuchtung erzielt werden, bei der beide Fahrspuren sowohl in als auch entgegen der Fahrtrichtung beleuchtet werden. Durch Abschalten der beiden Mitstrahl-Leuchtenbausteine 2a und 2b kann eine Gegenstrahlcharakteristik erzeugt und durch Abschalten der beiden Gegenstrahl-Leuchtenbausteine 2c und 2d eine Mitstrahlcharakteristik erzeugt werden, vgl. Fig. 9 linke Spalte.

Wie Fig. 9, mittlere Spalte zeigt, kann diese Umschaltbarkeit zwischen verschiedenen Beleuchtungscharakteristiken nicht nur bei einer symmetrischen Leuchtenanordnung mittig über der Straße erzielt werden, sondern auch bei asymmetrischer, seitlicher Straßenbeleuchtung, wie sie in Fig. 4b verdeutlicht ist. Dies gilt gleichermaßen für gleiche Fahrtrichtung auf beiden nebeneinanderliegenden Fahrspuren 20a und 20b, vgl. Fig. 9 mittlere Spalte, wie auch für Gegenverkehr auf den beiden Fahrspuren 20a und 20b, vgl. rechte Spalte der Fig. 9.

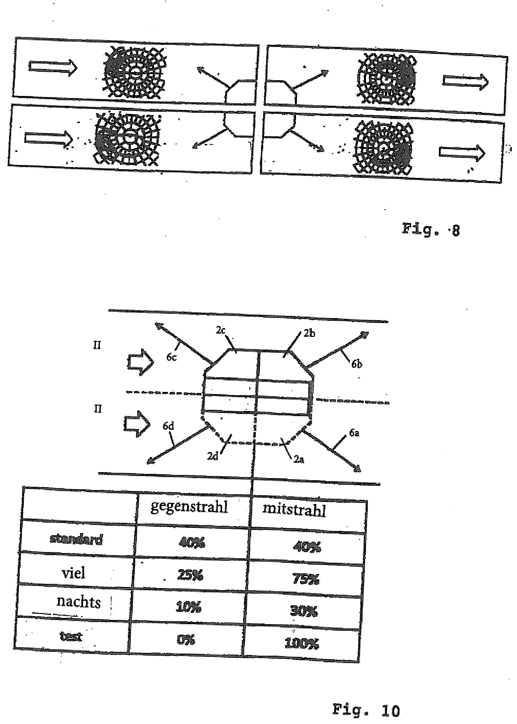

Wie Fig. 10 verdeutlicht, kann hierbei nicht nur ein Umschalten von 100% Mitstrahlprinzip auf 100% Gegenstrahlprinzip und umgekehrt erzielt werden, sondern auch graduell verschiedene Strahlungscharakteristiken erzielt werden, beispielsweise bei durchschnittlicher, standardmäßiger Verkehrsdichte 40% Mitstrahlung und 40% Gegenstrahlung oder beispielsweise bei hoher Verkehrsdichte 25% Gegenstrahlung und 75% Mitstrahlung.

Den Leuchtenbausteinen 2a, 2b, 2c und 2d kann hierzu ein Umschalter 12 zugeordnet sein, der Steuermittel zum individuellen Ein- und Ausschalten der einzelnen Leuchtenbausteine 2a, 2b, 2c und 2d aufweist und vorteilhafterweise auch Steuerungsmittel zum individuellen Dimmen der einzelnen Leuchtenbausteine 2a, 2b, 2c und 2d aufweisen kann, um die Leistung der einzelnen Leuchtenbausteine stufenlos oder feinstufig zwischen 0% und 100% einstellen zu können.

Der solchermaßen ausgebildete Umschalter 12 kann händisch betätige Eingabemittel aufweisen, beispielsweise einen Reglerknopf, um die Lichtstärkeverteilung beziehungsweise Abstrahlcharakteristik von Hand in der gewünschten Weise einstellen zu können.

Alternativ oder zusätzlich kann ein automatischer Betätiger 13 vorgesehen sein, der die Abstrahlcharakteristik automatisch in Abhängigkeit zumindest eines Straßenverkehrsparameters automatisch steuert, insbesondere variabel von Mitstrahlprinzip auf Gegenstrahlprinzip oder Mischformen hieraus umschaltet. Hierzu kann der Betätiger 13 über eine geeignete Schnittstelle beziehungsweise einen Signaleingang mit einer Sensoreinrichtung 16 verbunden sein, die die Verkehrsdichte, die mittlere Fahrzeuggeschwindigkeit, die Fahrtrichtung und/oder die Tageslichtstärke erfasst.

Ferner kann die Straßenleuchte 1 auch hinsichtlich der Farbtemperatur des von ihr abgegebenen Lichts variiert werden. Dies kann beispielsweise durch mehrfarbige LEDs bewerkstelligt werden, die als Leuchtmittelgruppe einem Reflektor 15 zugeordnet werden können, wie dies beispielsweise Fig. 1 zeigt, gemäß der zwei LEDs einem Reflektor 5 zugeordnet sind. Insbesondere kann eine Farbverschiebung von mehr weiß zu mehr gelb beziehungsweise mehr rot erfolgen, um wahlweise ein weißeres Licht oder ein rötlicheres Licht erzeugen zu können.

Eine Farbsteuervorrichtung 19 kann hierzu die Leistung der weißen und/oder gelben und/oder roten Leuchtmittel 3 relativ zueinander und/oder jeweils individuell absolut variieren, wobei die genannte Farbsteuervorrichtung 19 hierbei die Straßenverkehrsparameter Verkehrsdichte und Tageslichtstärke berücksichtigen kann, wie dies eingangs schon erläutert wurde.

## Patentansprüche

1. Straßenleuchte, insbesondere Tunnelleuchte, mit mehreren Leuchtenbausteinen (2), die jeweils zumindest ein Leuchtmittel (3) und eine zugehörige Optik (4) zum Bestrahlen eines begrenzten Strahlungsraums (5) in einer Hauptabstrahlrichtung (6) aufweisen, wobei verschiedene Leuchtenbausteine (2a, 2b, 2c, 2d) verschieden ausgerichtete Hauptabstrahlrichtungen besitzen und die von den Leuchtbausteinen (2a, 2b, 2c, 2d) bestrahlten Strahlungsräume (5a, 5b, 5c, 5d) aufsummiert einen Gesamt-Strahlungsraum mit einer bestimmten Gesamtlichtstärkeverteilung ergeben, wobei die Straßenleuchte in verschiedenen Betriebsmodi betreibbar ist, in denen verschiedene Gesamtlichtstärkeverteilungen mit verschiedenen Gesamt-Hauptabstrahlrichtungen erzeugt werden, wobei ein automatischer Umschalter (12) zum Umschalten zwischen den verschiedenen Betriebsmodi und Einstellen verschiedener Gesamt-Hauptabstrahlrichtungen in Abhängigkeit zumindest eines Parameters aus der Parametergruppe umfassend Verkehrsdichte, Fahrgeschwindigkeiten, Fahrzeugabstände, Tageszeit, Kalenderzeit und Fahrzeugtypologie vorgesehen ist, **dadurch gekennzeichnet, dass** die genannten Betriebsmodi graduelle Zwischenbetriebsstellungen, in denen eine Fahrbahn sowohl teilweise nach dem Mitstrahlprinzip als auch teilweise nach dem Gegenstrahlprinzip beleuchtet ist, umfassen und der Umschalter (12) automatische Steuermittel zum stufenlosen oder feinstufigen, mindestens dreistufigen Einstellen von Zwischenstellungen mit mehr Mitstrahlprinzip und Zwischenstellungen mit mehr Gegenstrahlprinzip in Abhängigkeit zumindest eines der genannten Parameter aufweist.

2. Straßenleuchte nach dem vorhergehenden Anspruch, wobei die Betriebsmodi zumindest einen Betriebsmodus, in dem zwei nebeneinanderliegende Fahrspuren mit derselben Lichtstärkeverteilung beleuchtet sind, und einen Betriebsmodus, in dem die zwei nebeneinanderliegenden Fahrspuren mit einander entgegengerichteten Lichtstärkeverteilungen beleuchtet sind, umfassen.

3. Straßenleuchte nach einem der vorhergehenden Ansprüche, wobei ein automatischer Betätiger (13) zum automatischen Betätigen des Umschalters (12) einen Signaleingang zum Berücksichtigen eines Sensorsignals einer Sensoreinrichtung (16), die die Verkehrsdichte und/oder die Fahrzeuggeschwindigkeiten und/oder die Fahrzeugabstände und/oder die Fahrzeugtypologie erfasst und/oder die Tageszeit und/oder die Kalenderzeit bereitstellt, aufweist.

4. Straßenleuchte nach dem vorhergehenden Anspruch, wobei der Betätiger (13) Betätigungsmittel zum Betätigen des Umschalters (12) in Abhängigkeit der Verkehrsdichte derart, dass bei höherer Verkehrsdichte mehr Licht nach dem Mitstrahlprinzip und/oder weniger Licht nach dem Gegenstrahlprinzip und bei geringerer Verkehrsdichte weniger Licht nach dem Mitstrahlprinzip und/oder mehr Licht nach dem Gegenstrahlprinzip auf die Fahrbahn gestrahlt wird, aufweist.

5. Straßenleuchte nach einem der beiden vorhergehenden Ansprüche, wobei der Betätiger (13) Betätigungsmittel zum Betätigen des Umschalters (12) in Abhängigkeit der Fahrgeschwindigkeiten derart, dass bei höheren Fahrgeschwindigkeiten mehr Licht nach dem Mitstrahlprinzip und/oder weniger Licht nach dem Gegenstrahlprinzip und bei niedrigeren Fahrgeschwindigkeiten weniger Licht nach dem Mitstrahlprinzip und/oder mehr Licht nach dem Gegenstrahlprinzip auf die Fahrbahn gestrahlt wird, aufweist.

6. Straßenleuchte nach einem der Ansprüche 3 bis 5, wobei der Betätiger (13) Betätigungsmittel zum Betätigen des Umschalters (12) in Abhängigkeit der Tageszeit derart, dass in den Nachmittagsstunden, insbesondere zwischen 13 Uhr und 16 Uhr, mehr Licht nach dem Mitstrahlprinzip und/oder weniger Licht nach dem Gegenstrahlprinzip und in frühen Morgenstunden, insbesondere zwischen 2 Uhr und 6 Uhr, weniger Licht nach dem Mitstrahlprinzip und/oder mehr Licht nach dem Gegenstrahlprinzip auf die Fahrbahn gestrahlt wird, aufweist.

7. Straßenleuchte nach einem der Ansprüche 3 bis 6, wobei der Betätiger (13) Betätigungsmittel zum Betätigen des Umschalters (12) in Abhängigkeit der Fahrzeugtypologie derart, dass bei höherem LKW-Anteil mehr Licht nach dem Mitstrahlprinzip und/oder weniger Licht nach dem Gegenstrahlprinzip und bei geringerem LKW-Anteil weniger Licht nach dem Mitstrahlprinzip und/oder mehr Licht nach dem Gegenstrahlprinzip auf die Fahrbahn gestrahlt wird, aufweist.

8. Straßenleuchte nach einem der vorhergehenden Ansprüche, wobei die Straßenleuchte einen modularen Aufbau besitzt, wobei die Leuchtenbausteine (2a, 2b, 2c, 2d) mit verschiedenen Hauptabstrahlrichtungen (6a, 6b, 6c, 6d) gegeneinander austauschbar sind, sodass die Straßenleuchte mit verschiedenen Gesamtstrahlungsräumen mit verschiedenen Gesamtlichtstärkeverteilungen konfigurierbar ist, wobei die Leuchtenbausteine (2) trotz verschiedener Hauptabstrahlrichtungen (6) und/oder verschiedenen Lichtstärkeverteilungen einander entsprechende Anschlussmaße besitzen und ein Bausteinhalter (7) vorgesehen ist, der mehrere mit den genannten Anschlussmaßen der Leuchtenbausteine (2) kompatible Anschlussplätze (8) besitzt, sodass an jedem Anschlussplatz (8) verschiedene Leuchtenbausteine (2) montierbar sind.

9. Straßenleuchte nach dem vorhergehenden Anspruch, wobei der Bausteinhalter (7) ein schienenförmiges Leuchtengehäuse (9) bildet, das die Leuchtenbausteine (2) rückseitig abdeckt, wobei das Leuchtengehäuse (9) an seitlichen Rändern eine Schiebeführung (10) besitzt, in die die Leuchtenbausteine (2) umfassend eine LED-Platine und einen eine asymetrische Lichtstärkeverteilung bewirkenden Optikbaustein, insbesondere Reflektor oder Linse, einschiebbar sind, wobei die Leuchtenbausteine (2) und die Schiebeführung derart ausgebildet sind, dass die Leuchtenbausteine (2) jeweils in zumindest zwei um 180 Grad, vorzugsweise in vier um 90 Grad zueinander verdrehten Ausrichtungen einschiebbar sind.

10. Straßenleuchte nach einem der vorhergehenden Ansprüche, wobei die Leuchtenbausteine (2) zumindest einen Leuchtenbaustein, dessen Strahlungsraum ein Viertel- oder Achtelraum ist und dessen Hauptabstrahlrichtung der Fahrtrichtung (11) entgegengerichtet ist, und zumindest einen weiteren Leuchtenbaustein umfassen, dessen Strahlungsraum (5) ein Viertel- oder Achtelraum ist und dessen Hauptabstrahlrichtung mit der Fahrtrichtung mitgehend gerichtet ist.

11. Straßenleuchte nach einem der vorhergehenden Ansprüche, wobei die Leuchtenbausteine (2) zumindest vier verschiedene, insbesondere jeweils einen Achtelraum bestrahlende, Leuchtenbausteine mit vier verschiedenen Hauptabstrahlrichtungen (6a, 6b, 6c, 6d) und/oder vier verschiedenen Lichtstärkeverteilungen umfassen, wobei ein erster Leuchtenbaustein (2a) eine erste Fahrspur nach dem Mitstrahlprinzip beleuchtet, ein zweiter Leuchtenbaustein (2b) eine zweite Fahrspur nach dem Mitstrahlprinzip beleuchtet, ein dritter Leuchtenbaustein (2c) die genannte erste Fahrspur nach dem Gegenstrahlprinzip beleuchtet und ein vierter Leuchtenbaustein (2d) die genannte zweite Fahrspur nach dem Gegenstrahlprinzip beleuchtet.

12. Straßenleuchte nach einem der vorhergehenden Ansprüche, wobei zumindest einer der Leuchtenbausteine (2) hinsichtlich der Lichtfarbe des abgegebenen Lichts variabel ausgebildet ist und eine Farbsteuervorrichtung (19) zum Steuern der Lichtfarbe in Abhängigkeit eines Straßenverkehrsparameters ausgewählt aus der Gruppe Verkehrsdichte, Fahrgeschwindigkeiten, Tageszeit und Tageslichtstärke vorgesehen ist.

13. Straßenleuchte nach dem vorhergehenden Anspruch, wobei die Farbsteuervorrichtung (19) Steuermittel zum Steuern der Lichtfarbe in Abhängigkeit der Tageslichtstärke derart, dass bei hohen Tageslichtstärken mehr weißes Licht oder weißeres Licht und bei geringen Tageslichtstärken mehr gelbes und/oder rotes Licht und/oder gelberes und/oder rötlicheres Licht abgegeben wird, aufweist.

## Claims

1. Street lamp, in particular a tunnel lamp, with multiple lamp modules (2) each comprising at least one illuminant (3) and an associated optics (4) for irradiating a limited radiation area (5) in a main radiation direction (6), wherein various lamp modules (2a, 2b, 2c, 2d) have differently oriented main radiation directions and the radiation areas (5a, 5b, 5c, 5d) radiated by the lamp modules (2a, 2b, 2c, 2d) resulting in an overall radiation area with a certain overall light intensity distribution when summed up, wherein the street lamp can be operated in various operation modes in which various overall light intensity distributions with various main radiation directions are generated, wherein an automatic switch (12) is provided for switching between the different operation modes and setting various overall main radiation directions depending on at least one parameter from the parameter group including traffic density, driving speed, vehicle distance, day time, calendar time and vehicle typology, **characterized in that** the mentioned operation modes include gradual intermediate operation positions in which a lane is illuminated partially on the co-radiation principle as well as partially on the counter-radiation principle, and the switch (12) comprises automatic control means for setting, in a stage-less or finely graduated, at least three-stage manner, intermediate positions with more co-radiation principle and intermediate positions with more counter-radiation principle depending on at least one of the mentioned parameters.

2. Street lamp according to the preceding claim, wherein the operation modes include at least one operation mode in which two adjacent lanes are illuminated with identical light intensity distribution, and one operation mode in which two adjacent lanes are illuminated with opposite light intensity distributions.

3. Street lamp according to one of the preceding claims, wherein an automatic actuator (13) for automatically actuating the switch (12) comprises one signal input for consideration of a sensor signal of a sensor device (16) which detects the traffic density and/or the vehicle speeds and/or the vehicle distances and/or the vehicle typology and/or provides the day time and/or calendar time.

4. Street lamp according to the preceding claim, wherein the actuator (13) comprises actuating means for actuating the switch (12) depending on the traffic density in such a way that with higher traffic density, more light on the co-radiation principle and/or less light on the counter-radiation principle and with lower traffic density, less light on the co-radiation principle and/or more light on the counter-radiation principle is radiated on to the lane.

5. Street lamp according to one of the two preceding claims, wherein the actuator (13) comprises actuating means for actuating the switch (12) depending on the driving speeds in such a way that with higher driving speeds, more light on the co-radiation principle and/or less light on the counter-radiation principle, and with lower driving speeds less light in the co-radiation principle and/or more light on the counter-radiation principle is radiated on to the lane.

6. Street lamp according to one of claims 3 to 5, wherein the actuator (13) comprises actuating means for actuating the switch (12) depending on the day time in such a way that during afternoon hours, in particular between 1 p.m. and 4 p.m., more light on the co-radiation principle and/or less light on the counter-radiation principle and during early morning hours, in particular between 2 a.m. and 6 a.m., less light on the co-radiation principle and/or more light on the counter-radiation principle is radiated on to the lane.

7. Street lamp according to one of claims 3 to 6, wherein the actuator (13) comprises actuating means for actuating the switch (12) depending on the vehicle typology in such a way that with higher HGV proportion, more light on the co-radiation principle and/or less light on the counter-radiation principle and with lower HGV proportion, less light in the co-radiation principle and/or more light on the counter-radiation principle is radiated on to the lane.

8. Street lamp according to one of the preceding claims, wherein the street lamp has a modular structure, wherein the lamp modules (2a, 2b, 2c, 2d) having various main radiation directions (6a, 6b, 6c, 6d) are exchangeable with one another so that the street lamp can be configured with various overall radiation areas with various overall light intensity distributions, wherein the lamp modules (2) have installation dimensions corresponding to one another despite various main radiation directions (6) and/or various light intensity distributions and a module holder (7) is provided, which has multiple installation locations (8) compatible with the mentioned installation dimensions of the lamp modules (2) so that various lamp modules (2) can be mounted in each installation locations (8).

9. Street lamp according to the preceding claim, wherein the module holder (7) forms a rail-like lamp housing (9), which covers the lamp modules (2) on the rear side, wherein the lamp housing (9) has a slide guidance (10) on lateral edges into which the lamp modules (2) including an LED board and an optic module causing an asymmetric light intensity distribution, in particular reflector or lens, are insertable, wherein the lamp modules (2) and the slide guidance are configured in such a way that the lamp modules (2) are insertable in each case with at least two orientations rotated by 180 degrees with respect to one another, preferably with four orientations rotated by 90 degrees with respect to one another.

10. Street lamp according to one of the preceding claims, wherein the lamp modules (2) include at least one lamp module, the radiation space of which is a quarter of a space or an eighth of a space and the main radiation direction of which is directed opposite to the driving direction (11), and include at least one further lamp module, the radiation area (5) of which is a quarter of a space or an eighth of a space and the main radiation direction of which is directed as to follow the driving direction.

11. Street lamp according to one of the preceding claims, wherein the lamp modules (2) include at least four different lamp modules, in particular radiating in each case an eighth of a space, with four different main radiation directions (6a, 6b, 6c, 6d) and/or four different light intensity distributions, wherein a first lamp module (2a) illuminates a first lane on the co-radiation principle, a second lamp module (2b) illuminates a second lane on the co-radiation principle, a third lamp module (2c) illuminates the mentioned first lane on the counter-radiation principle and a fourth lamp module (2d) illuminates the mentioned second lane on the counter-radiation principle.

12. Street lamp according to one of the preceding claims, wherein at least one of the lamp modules (2) is configured to be variable with respect to light color of the emitted light, and a color control device (19) is provided for controlling the light color depending on a traffic parameter selected from the group including traffic density, driving speeds, day time and daylight intensity.

13. Street lamp according to the preceding claim, wherein the color control device (19) comprises control means for controlling the light color depending on the daylight intensity in such a way that with high daylight intensities, more white light or more intense white light is emitted, and with lower daylight intensities, more yellow light and/or red light and/or more intense yellow and/or more intense red light is emitted.

## Revendications

1. Éclairage de route, notamment éclairage de tunnel, comprenant plusieurs modules lumineux (2) qui présentent respectivement au moins une lampe (3) et un dispositif optique (4) correspondant destiné à irradier un espace de rayonnement (5) limité dans une direction de rayonnement principal (6), différents modules lumineux (2a, 2b, 2c, 2d) possédant des directions de rayonnement principal orientées différemment et les espaces de rayonnement (5a, 5b, 5c, 5d) éclairés par les modules lumineux (2a, 2b, 2c, 2d) donnant, au total, un espace de rayonnement total ayant une certaine répartition d'intensité lumineuse totale, l'éclairage de route pouvant fonctionner dans différents modes de fonctionnement, dans lesquels différentes répartitions d'intensité lumineuse totale sont générées avec différentes directions de rayonnement principal total, un commutateur automatique (12) destiné à commuter entre les différents modes de fonctionnement et à régler différentes directions de rayonnement principal total en fonction d'au moins un paramètre du groupe de paramètres comprenant la densité du trafic, les vitesses de circulation, les écarts entre les véhicules, le moment de la journée, le moment de l'année et la typologie des véhicules étant ménagé, **caractérisé en ce que** lesdits modes de fonctionnement comprennent des positions graduelles intermédiaires de fonctionnement dans lesquelles une voie de circulation est éclairée aussi bien en partie selon le principe de rayonnement dans le sens de circulation qu'en partie selon le principe d'éclairage dans le sens inverse de circulation, et **en ce que** le commutateur (12) présente des moyens de commande automatiques pour le réglage progressif ou de précision au moins de trois échelons de positions intermédiaires avec plus de principe de rayonnement dans le sens de circulation et de positions intermédiaires avec plus de principe de rayonnement dans le sens inverse de circulation en fonction d'au moins un des dits paramètres.

2. Éclairage de route selon la revendication précédente, les modes de fonctionnement comprenant au moins un mode de fonctionnement dans lequel deux voies de circulation situées l'une à côté de l'autre sont éclairées avec la même répartition d'intensité lumineuse, et un mode de fonctionnement dans lequel les deux voies de circulation situées l'une à côté de l'autre sont éclairées avec des répartitions d'intensité lumineuses dirigées inversement.

3. Éclairage de route selon l'une quelconque des revendications précédentes, un actionneur automatique (13) destiné à l'actionnement automatique du commutateur (12) présentant une entrée de signal pour tenir compte d'un signal de capteur d'un dispositif de capteur (16) qui enregistre l'intensité du trafic et/ou les vitesses des véhicules et/ou les écarts entre les véhicules et/ou la typologie des véhicules et fournit le moment de la journée et/ou le moment de l'année.

4. Éclairage de route selon la revendication précédente, l'actionneur (13) présentant des moyens d'actionnement destinés à actionner le commutateur (12) en fonction de l'intensité du trafic de manière à ce qu'en cas d'intensité de trafic élevée plus de lumière soit émise sur la voie de circulation selon le principe de rayonnement dans le sens de circulation et/ou moins de lumière soit émise sur la voie de circulation selon le principe de rayonnement dans le sens inverse de circulation, et à ce qu'en cas d'intensité de trafic moindre moins de lumière soit émise sur la voie de circulation selon le principe de rayonnement dans le sens de circulation et/ou plus de lumière soit émise sur la voie de circulation dans le sens inverse de circulation.

5. Éclairage de route selon l'une quelconque des deux revendications précédentes, l'actionneur (13) présentant des moyens d'actionnement destinés à actionner le commutateur (12) en fonction des vitesses de circulation de manière à ce qu'en cas de vitesses de circulation élevées plus de lumière soit émise sur la voie de circulation selon le principe de rayonnement dans le sens de circulation et/ou moins de lumière soit émise sur la voie de circulation selon le principe de rayonnement dans le sens inverse de circulation, et à ce qu'en cas de basses vitesses de circulation moins de lumière soit émise sur la voie de circulation selon le principe de rayonnement dans le sens de circulation et/ou plus de lumière soit émise sur la voie de circulation selon le principe de rayonnement dans le sens inverse de circulation.

6. Éclairage de route selon l'une quelconque des revendications 3 à 5, l'actionneur (13) présentant des moyens d'actionnement destinés à actionner le commutateur (12) en fonction du moment de la journée de manière à ce que pendant les heures de l'après-midi, notamment entre 13 heures et 16 heures, plus de lumière soit émise sur
la voie de circulation selon le principe de rayonnement dans le sens de circulation et/ou moins de lumière soit émise sur la voie de circulation selon le principe de rayonnement dans le sens inverse de circulation, et à ce que pendant les premières heures du matin, notamment entre 2 heures et 6 heures, moins de lumière soit émise sur la voie de circulation selon le principe de rayonnement dans le sens de circulation et/ou plus de lumière soit émise sur la voie de circulation selon le principe de rayonnement dans le sens inverse de circulation.

7. Éclairage de route selon l'une quelconque des revendications 3 à 6, l'actionneur (13) présentant des moyens d'actionnement destinés à actionner le commutateur (12) en fonction de la typologie des véhicules de manière à ce qu'en cas de proportion de camions élevée plus de lumière soit émise sur la voie de circulation selon le principe de rayonnement dans le sens de circulation et/ou moins de lumière soit émise sur la voie de circulation selon le principe de rayonnement dans le sens inverse de circulation, et à ce qu'en cas de proportion moindre de camions moins de lumière soit émise sur la voie de circulation selon le principe de rayonnement dans le sens de circulation et/ou plus de lumière soit émise sur la voie de circulation selon le principe de rayonnement dans le sens inverse de circulation.

8. Éclairage de route selon l'une quelconque des revendications précédentes, l'éclairage de route possédant une structure modulaire, les modules lumineux (2a, 2b, 2c, 2d) ayant différentes directions de rayonnement principal (6a, 6b, 6c, 6d) étant mutuellement interchangeables de sorte que l'éclairage de route ayant différents espaces de rayonnement total est configurable avec différentes répartitions d'intensité lumineuse totale, les modules lumineux (2) possédant des dimensions de raccordement correspondant les unes aux autres malgré différentes directions de rayonnement principal (6) et/ou différentes répartitions d'intensité lumineuse, et un module (7) étant prévu, lequel possède plusieurs emplacements de raccordement (8) compatibles avec lesdites dimensions de raccordement des modules lumineux (2), de sorte que différents modules lumineux (2) peuvent être montés à chaque emplacement de raccordement (8).

9. Éclairage de route selon la revendication précédente, le support de module (7) formant un boîtier de lampe (9) en forme de rail, lequel recouvre les modules lumineux (2) côté arrière, le boîtier de lampe (9) possédant un guidage coulissant (10) sur des bords latéraux, dans lequel les modules lumineux (2), comprenant une platine à LED et un module optique donnant une répartition d'intensité lumineuse asymétrique, notamment un réflecteur ou une lentille, sont insérables, les modules lumineux (2) et le guidage coulissant étant réalisés de manière à ce que les modules lumineux (2) soient insérables dans respectivement au moins deux orientations décalées de 180 degrés l'une par rapport à l'autre, de préférence dans quatre directions décalées de 90 degrés les unes par rapport aux autres.

10. Éclairage de route selon l'une quelconque des revendications précédentes, les modules lumineux (2) comprenant au moins un module lumineux dont l'espace de rayonnement est un quart ou un huitième d'espace et dont la direction de rayonnement principal est opposée au sens de circulation (11), et comprenant au moins un module lumineux supplémentaire dont l'espace de rayonnement (5) est un quart ou un huitième d'espace et dont la direction de rayonnement principal est dirigée en allant dans le sens de circulation.

11. Éclairage de route selon l'une quelconque des revendications précédentes, les modules lumineux (2) comprenant au moins quatre modules lumineux différents éclairant respectivement un huitième d'espace, ayant quatre directions différentes de rayonnement principal (6a, 6b, 6c, 6d) et/ou quatre répartitions d'intensité lumineuse différentes, un premier module lumineux (2a) éclairant une première voie de circulation selon le principe de rayonnement dans le sens de circulation, un deuxième module lumineux (2b) éclairant une deuxième voie de circulation selon le principe de rayonnement dans le sens de circulation, un troisième module lumineux (2c) éclairant ladite première voie de circulation selon le principe de rayonnement dans le sens inverse de circulation et un quatrième module lumineux (2d) éclairant ladite deuxième voie de circulation selon le principe de rayonnement dans le sens inverse de circulation.

12. Éclairage de route selon l'une quelconque des revendications précédentes, au moins un des modules lumineux (2) étant réalisé de manière variable quant à la couleur d'éclairage de la lumière émise, et un dispositif de commande de couleur (19) destiné à commander la couleur d'éclairage en fonction d'un paramètre de circulation routière sélectionné à partir du groupe densité du trafic, vitesses de circulation, moment de la journée et intensité de la lumière naturelle, étant prévu.

13. Éclairage de route selon la revendication précédente, le dispositif de commande de couleur (18) présentant des moyens de commande destinés à commander la couleur d'éclairage en fonction de l'intensité de la lumière naturelle de manière à ce qu'en cas d'intensités élevées de la lumière naturelle plus de lumière blanche ou de la lumière plus blanche soit émise et en ce qu'en cas de faibles intensités de lumière naturelle plus de lumière jaune et/ou de lumière rouge et/ou de la lumière plus jaune et/ou plus rouge soit émise.
